# FASCICULE DE BREVET EUROPEEN

(11) **EP 1 474 933 B1**
(45) Date de publication et mention de la délivrance du brevet: **12.10.2005**
(21) Numéro de dépôt: 02799828.5
(22) Date de dépôt: 19.12.2002
(51) Int. Cl.: H04Q 3/00, H04M 3/493

(54) **SERVICES VOCAUX TELEPHONIQUES INTERACTIFS**
INTERAKTIVE SPRACHDIENSTEN
INTERACTIVE TELEPHONE VOICE SERVICES

(30) Priorité: 13.02.2002 FR 0201878
(43) Date de publication de la demande: 10.11.2004
(73) Titulaire: FRANCE TELECOM, 75015 Paris (FR)
(72) Inventeur: BIETTRON, Laurent, F-22300 Lannion (FR); CHERBONNEL, Bénédicte, F-22700 Saint Quay Perros (FR); Miquel, Paul, 22300 Lannion (FR); PALLU, Frédéric, F-22560 Trebeurden (FR)
(74) Mandataire: Cabinet Martinet & Lapoux
(86) Numéro de dépôt international: PCT/FR2002/004444
(87) Numéro de publication internationale: WO 2003/069921

(56) Documents cités:
- WO-A-01/50453
- BALL T ET AL: "SPEECH-ENABLED SERVICES USING TELEPORTAL SOFTWARE AND VOICEXML" BELL LABS TECHNOLOGY, BELL LABORATORIES, MURREY HILL, NJ, US, vol. 5, no. 3, juillet 2000 (2000-07), pages 98-111, XP000975485 ISSN: 1089-7089

## Description

La présente invention concerne l'accès à des services vocaux téléphoniques particulièrement pour les éditer et les consulter.

Jusqu'à présent, le développement d'applications vocales était le lot d'experts en systèmes vocaux. Les techniques et les moyens de les mettre en oeuvre étaient des solutions qualifiées de propriétaires. Les services n'étaient donc pas portables.

Avec l'émergence du langage XML (extensible Markup Language) sont apparus des langages de haut niveau générique dans différents domaines scientifiques ou industriels ; en mathématique : MathML (Mathematical Markup Language), en astronomie : AIML (Astronomical Instrument Markup Language) ou encore en chimie : CML (Chemical Markup Language). Ces langages inspirés du langage de présentation HTML mais en y modifant la forme servent à développer des systèmes génériques dans des domaines particuliers pour diffuser des documents à travers le réseau internet.

De manière similaire est apparu le langage VXML (Voice extensible Markup Language) dans le domaine de la voix, défini par le consortium "VoiceXML Forum". Le langage VXML est utilisé pour programmer des dialogues vocaux utilisant la synthèse vocale, des fichiers audio, la reconnaissance vocale et de la saisie sur un clavier téléphonique. Le langage VXML est également utilisé pour l'enregistrement de saisies vocales mais aussi de saisies alphanumériques au clavier téléphonique. Le but premier du langage VXML est d'interconnecter le monde du Web à celui de la téléphonie fixe ou mobile.

Un exemple d'utilisation de VXML se trouve dans "Speech-Enabled Services using Teleportal™ Software and VoiceXML" Bell Labs Technology, vol. 5, n°3, juillet 2000, pages 98-111, XP000975485.

Une plate-forme vocale est composée d'un client HTTP (HyperText Transfer Protocol) récupérant des pages VXML, d'un interpréteur VXML, de moteurs de synthèse et reconnaissance vocale, d'un lecteur de flux audio ou de saisie de touche et de moyens d'émission-réception téléphoniques. Les pages VXML sont délivrées par des serveurs applicatifs, tels que des serveurs HTTP classiques, sous la forme de fichiers statiques définis une fois pour toutes ou dynamiquement par l'intermédiaire de scripts CGI ou applets Java, par exemple, qui peuvent récupérer des données d'une base de données.

Le téléphone est encore le moyen le plus usité et le plus répandu pour accéder à une information. Quel que soit le lieu ou le moment, il est pratiquement toujours possible d'avoir accès à un téléphone. Le réseau internet nécessite des outils plus complexes et n'est pas partagé par l'ensemble de la population. Or autant il est facile de mettre à disposition une information sur internet, autant il est complexe de le faire par téléphone, c'est-à-dire par transmission vocale de l'information.

Selon un premier exemple, un club sportif souhaite proposer à ses adhérents l'accès à des informations très volatiles, telles que les prochaines réunions sportives. Les adhérents n'ont pas tous accès à internet et doivent accéder aux informations au dernier moment. Le responsable du club ne souhaite pas appeler, ou être appelé par chacun des adhérents. Une messagerie vocale pour diffuser les informations n'est qu'une solution partielle à ce problème. La messagerie vocale ne diffuse qu'un message vocal et ne constitue pas un véritable service vocal interactif offrant des informations variées vocales et textuelles et une navigation pour accéder à ces données.

Actuellement, il n'existe pas de solution générique à ce type de problème.

Un deuxième exemple est relatif à un fournisseur d'informations sur internet. L'audience potentielle par téléphone de ce fournisseur ne lui permet pas d'investir dans le développement et l'hébergement d'un accès vocal interactif à ses services étant donné les coûts fixes d'abonnement et d'hébergement. Le propriétaire du site serait sûrement disposé à rendre ses informations disponibles par téléphone si cette solution était systématiquement rentable et facilement réalisable.

Un troisième exemple concerne une personne qui consulte régulièrement des services vocaux relatifs par exemple à la météo, l'horoscope, la bourse, etc. Elle doit appeler séparément chacun de ces services. La navigation à l'intérieur d'un service vocal est particulier à celui-ci avec ou sans reconnaissance de parole, en dépendance d'une touche prédéterminée pour annuler, etc.

Pour toutes ces personnes il n'est pas possible de créer par elles-même leurs propres services vocaux comprenant les services qui les intéressent, et seulement ces services. Par exemple, si une personne accède à une liste de programmes de télévision, la liste ne doit contenir que les programmes des chaînes de télévision que la personne reçoit.

Actuellement, des usagers peuvent personnaliser les services d'un portail web pour n'avoir accès qu'aux services web qui les intéressent. D'autre part, un usager peut créer ses propres pages web avec par exemple des modèles de pages. De plus, les hyperliens permettent de naviguer à l'intérieur et entre des services existants. Si l'on compare la publication de données via internet et par téléphone, les possibilités de construction de services vocaux interactifs par téléphone sont bien inférieures.

Pour construire un service vocal, il faut avoir accès à une plate-forme vocale connectée au réseau téléphonique et être très compétent en informatique.

Deux solutions peuvent être envisagées. La première solution consiste à accéder à un serveur vocal et développer un service déterminé dans un langage propriétaire dépendant de la plate-forme vocale. Cette première solution pourrait être remplacée par une deuxième solution fondée sur le langage structuré abstrait VXML qui peut être interprété par un nombre croissant de plates-formes vocales. L'intérêt de la deuxième solution réside dans le caractère normalisé du langage utilisé VXML et dans la transposition d'un service d'une plate-forme vocale à une autre.

L'invention a pour **objectif** de fournir une interactivité entre des services vocaux présentant des informations variées, et édités et implémentés indépendamment les uns des autres d'une manière aussi facile que pour la création de pages web sur le réseau internet.

A cette fin, un procédé pour accéder depuis un terminal d'usager à des services vocaux interactifs selon un premier langage dans un serveur vocal interactif, est caractérisé en ce qu'il comprend dans une plate-forme communiquant avec le serveur vocal,
une mise en réseau des services vocaux écrits en un deuxième langage, au moyen d'identificateurs inclus dans des services vocaux et relatifs à des parties d'autres services vocaux et au moyen de retours vers lesdits services vocaux inclus respectivement dans lesdites parties d'autres services vocaux, et
par une conversion du deuxième langage en le premier langage dans la plate-forme, de tout service vocal appelé depuis le terminal à travers le serveur vocal afin de transmettre depuis la plate-forme le service vocal converti en le premier langage au serveur vocal pour l'y exécuter, et de toute partie d'un autre service vocal identifiée dans ledit service vocal et appelée au cours de l'exécution dudit service vocal afin de transmettre depuis la plate-forme la partie de service vocal convertie en le premier langage au serveur vocal pour l'y exécuter.

Grâce aux liens constitués par des couples d'identificateur et de retour entre services vocaux, l'invention met en réseaux des services vocaux qui partagent dynamiquement certaines parties, et ainsi permet une navigation entre les services vocaux. Un service vocal de l'invention peut donner accès à d'autres services vocaux et/ou à des parties d'autres services vocaux édités également selon l'invention. Dans la description qui suit, une "partie" d'un signal vocal peut signifier également le service vocal lui-même.

Au lieu que tous les services vocaux soient implémentés dans une plate-forme, ils peuvent être implémentés dans plusieurs plates-formes, deux plates-formes communiquant entre elles lorsqu'au moins une partie d'un service dans l'une d'elles est identifiée et appelée par un autre service dans l'autre plate-forme.

Les services vocaux sont écrits dans un deuxième langage de haut niveau différent du premier langage selon lequel un service vocal est exécuté dans le serveur vocal. La partie d'un autre service vocal appelé dans le service vocal appelant est lancée après avoir été convertie du deuxième en le premier langage dans la plate-forme.

Le deuxième langage est propre à l'invention et le premier langage est par exemple le langage VXML compatible avec le serveur vocal interactif. Le deuxième langage facilite pour un usager non spécialiste la définition, par exemple via une interface web, d'un service vocal interactif de structure arborescente, l'introduction de divers attributs régissant notamment les accès à des services et parties de services vocaux et leurs périodes de validité, et le contrôle d'erreurs.

Les caractéristiques du premier langage correspondent aux besoins de services vocaux de diffusion d'informations comme la diffusion d'informations par divers moyens, tels qu'écoute de fichiers sonores, synthèse de parole à partir de textes, et l'enregistrement de messages audio par téléphone pour les administrateurs des services vocaux. Le service implémenté automatiquement en le premier langage sur la plate-forme interprétant ce langage peut être utilisé par l'éditeur du service et/ou une communauté d'intérêt telle qu'un club sportif, une association, des professionnels, ou encore le grand public.

Par exemple, le procédé selon l'invention peut comprendre, au cours de l'édition depuis un terminal d'administrateur de service vocal, ou au cours d'une modification d'un service vocal déjà publié et accessible depuis des terminaux d'usager,
- une introduction dans le service vocal en le deuxième langage d'un attribut pour autoriser ou interdire l'appel du service vocal ou d'une partie du service vocal dans un autre service vocal,
- une introduction de l'identificateur d'un autre service ou d'une partie d'un autre service, y compris une adresse de l'autre service ou de la partie de l'autre service vocal, dans un service vocal écrit en le deuxième langage éventuellement dans une autre plate-forme, la partie de service pouvant être un sous-menu, un ensemble ou choix de sous-menus,
- une introduction de l'identificateur d'un fichier texte à synthétiser en un fichier vocal dans le serveur vocal interactif, ou d'un fichier son saisi ou lu dans le terminal d'administrateur, dans un service vocal en le deuxième langage afin de mémoriser le fichier dans la plate-forme,
- une introduction dans un service vocal en le deuxième langage, d'une adresse d'un fichier texte à synthétiser en un fichier vocal dans le serveur vocal ou l'adresse d'un fichier son, le fichier texte ou son étant disponible dans une autre plate-forme éloignée,
- une fourniture d'un résumé d'un service vocal, ou textuel à synthétiser ultérieurement, à la plate-forme,
- une introduction dans le premier service vocal de dates de début et fin de validité entre lesquelles, ou d'au moins une date de validité pendant laquelle, une donnée incluse dans le premier service vocal est accessible dans la plate-forme au terminal d'usager via un serveur vocal,
- ou encore l'introduction d'un code secret d'accès et/ou d'une liste d'identificateurs de terminal d'usager en correspondance avec l'identificateur d'un service vocal.

L'invention concerne encore un système de services vocaux interactifs selon le procédé de l'invention, dans lequel un terminal d'usager accède à des services vocaux exécutés selon un premier langage dans un serveur vocal interactif. Le système est caractérisé en ce qu'il comprend une première plate-forme et un terminal d'administrateur pour éditer un service vocal interactif accessible depuis le terminal d'usager à travers le serveur vocal interactif dans une deuxième plate-forme,
la première plate-forme mettant en réseau des services vocaux écrits en un' deuxième langage, au moyen d'identificateurs inclus dans des services vocaux et relatifs à des parties d'autres services vocaux et au moyen de retours vers lesdits services vocaux inclus respectivement dans lesdites parties d'autres services vocaux, et
la deuxième plate-forme convertissant du deuxième langage en le premier langage tout service vocal appelé depuis le terminal à travers le serveur vocal afin de transmettre depuis la deuxième plate-forme le service vocal converti en le premier langage au serveur vocal pour l'y exécuter, et toute partie d'un autre service vocal identifiée dans ledit service vocal et appelée au cours de l'exécution dudit service vocal afin de transmettre depuis la deuxième plate-forme la partie de service vocal convertie en le premier langage au serveur vocal pour l'y exécuter. De préférence, les première et deuxième plates-formes sont confondues en une unique plate-forme.

Le système de l'invention repose sur le deuxième langage de haut niveau propre à l'invention permettant de décrire un service vocal. L'utilisation de ce langage garantit :
- la création d'un service vocal et l'accessibilité par téléphone du service créé par l'intermédiaire de la plate-forme ;
- la navigation entre tous les éléments du service ; et
- l'établissement d'un véritable réseau de services vocaux décrits dans le deuxième langage.

D'autres caractéristiques et avantages de la présente invention apparaîtront plus clairement à la lecture de la description suivante de plusieurs réalisations préférées de l'invention en référence aux **dessins annexés** correspondants dans lesquels :
- la figure 1 est un bloc-diagramme d'un système de création et de navigation de services vocaux téléphoniques interactifs selon l'invention ;
- les figures 2A et 2B sont des parties gauche et droite d'une page d'écran dans un terminal d'administrateur lors de la création d'un service vocal ;
- la figure 3 est un algorithme d'édition de service vocal selon l'invention ;
- la figure 4 est un algorithme de sélection de service vocal depuis un terminal d'usager selon l'invention ; et
- la figure 5 est un algorithme de consultation de service vocal sélectionné selon l'invention.

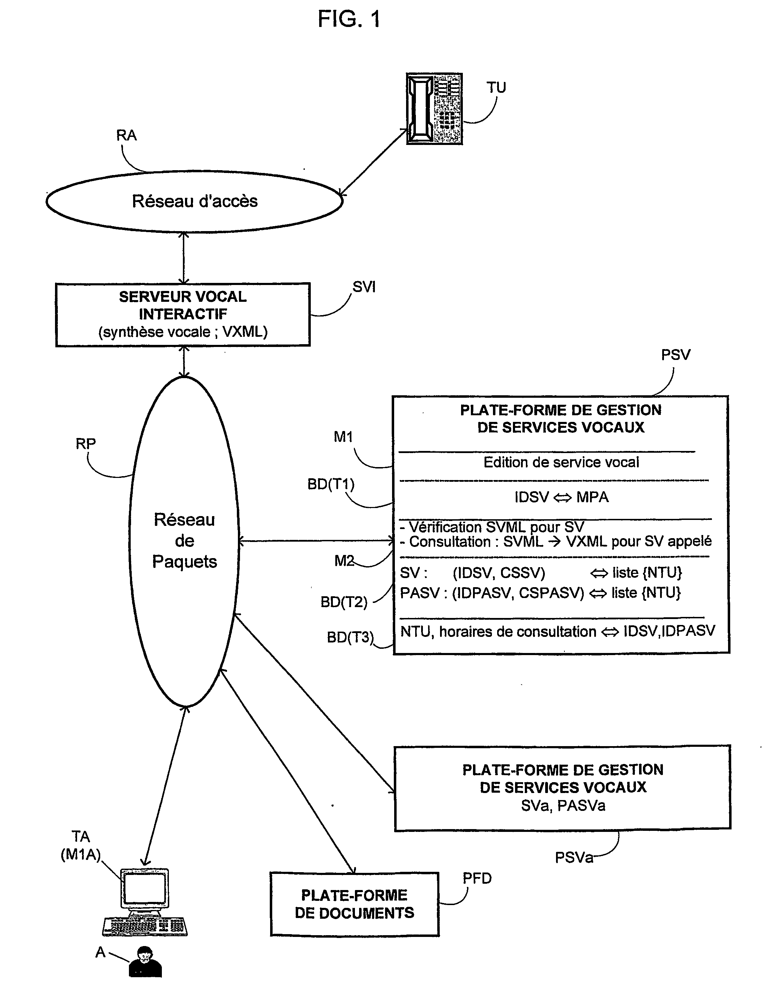

En référence à la figure 1, un **système de services vocaux** téléphoniques interactifs comprend d'une part, un moyen d'édition d'un service vocal par un usager quelconque, appelé ci-après administrateur A, d'autre part un moyen de consultation de service vocal par des usagers notamment du réseau téléphonique.

Le moyen d'édition comprend essentiellement au moins un terminal d'administrateur TA qui est typiquement un ordinateur personnel relié à un réseau de paquets RP, tel que le réseau internet, et une plate-forme de gestion de services vocaux PSV reliée également au réseau internet RP et associée à une base de données BD. L'administrateur A est par exemple un usager non spécialiste, ou bien le représentant d'une communauté d'intérêt telle qu'un club sportif, une association ou un groupement de professionnels.

Le moyen de consultation de service vocal comprend essentiellement la plate-forme PSV offrant un réseau de services vocaux selon l'invention, un serveur vocal interactif SVI contenant notamment un module de synthèse vocale et pouvant communiquer avec la plate-forme PSV à travers le réseau internet RP, et plusieurs terminaux téléphoniques d'usager TU reliés à travers un réseau d'accès RA au serveur vocal SVI. Les services vocaux sont appelés depuis les terminaux d'usager TU dans le serveur vocal SVI pour y être exécutés selon un premier langage d'exécution connu, par exemple le langage VXML. Le réseau d'accès RA peut être le réseau téléphonique commuté RTC, et/ou un réseau numérique à intégration de services RNIS et/ou le réseau fixe d'un réseau de radiotéléphonie cellulaire lorsque le terminal d'usager TU est un radiotéléphone mobile.

Pour ce qui concerne l'invention, la plate-forme de services vocaux PSV comprend essentiellement deux modules logiciels M1 et M2 et la base de données BD. En variante, les modules M1 et M2 sont implantés dans deux plates-formes distinctes reliées à travers le réseau RP.

Le premier module M1 sert à l'édition simplifiée de tout service vocal interactif sous la forme d'un fichier en un deuxième langage de programmation SVML (Simple Voice Markup Language) par l'administrateur A devant le terminal TA.

Le **langage SVML** propre à l'invention est un langage de programmation de haut niveau qui sert à définir d'une façon simple un service vocal interactif ayant une structure arborescente.

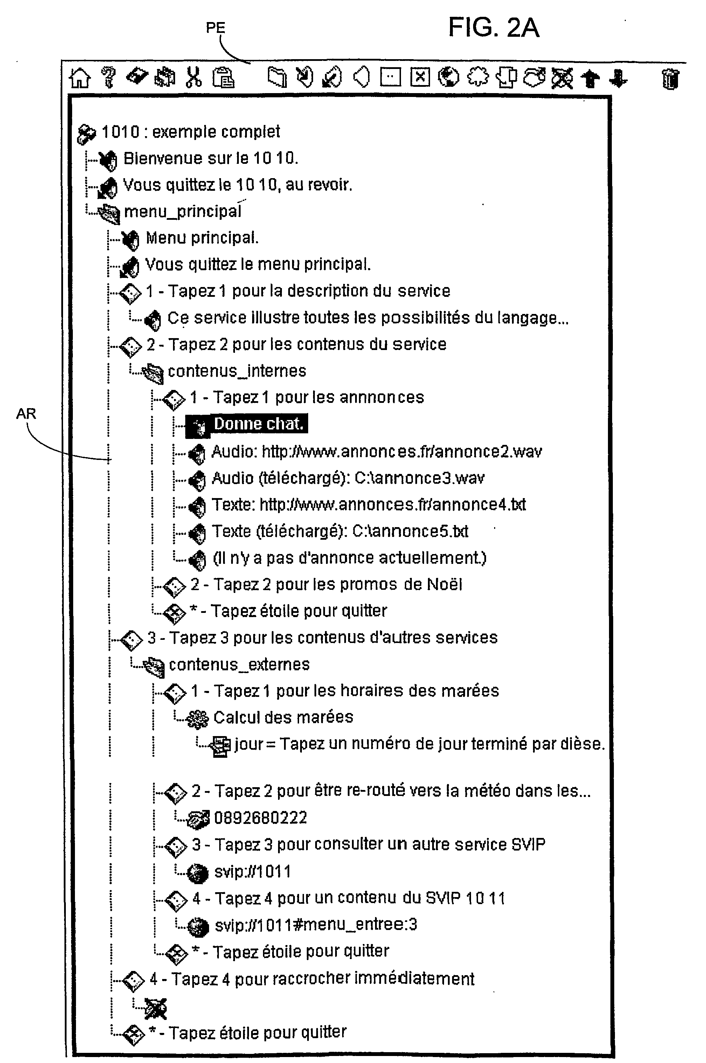

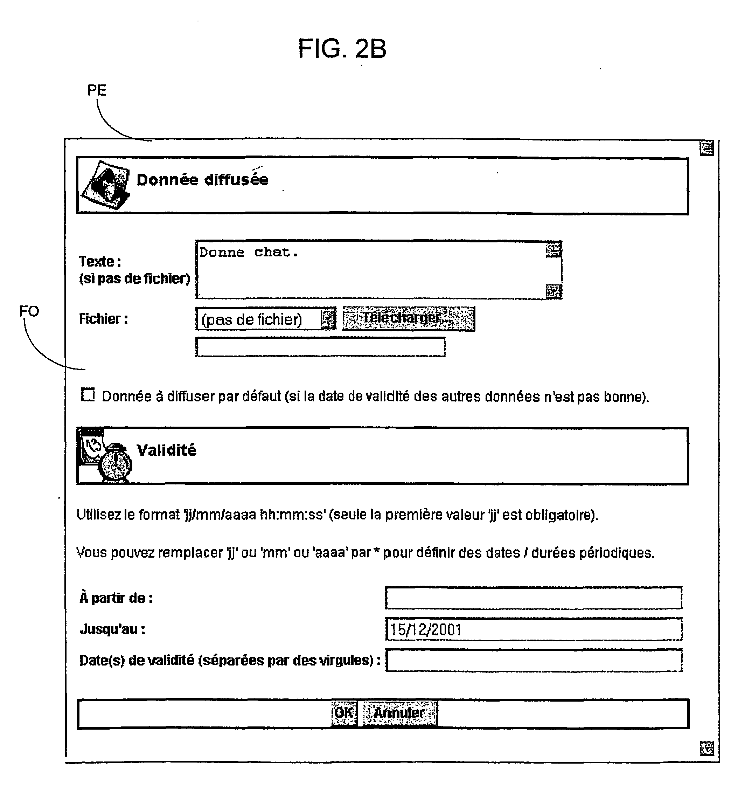

A titre d'exemple, les figures 2A et 2B montrent une page d'écran PE affichée dans le terminal d'administrateur TA selon des instructions et des données délivrées par un module d'application d'édition M1A issu du module M1 et téléchargé depuis la plate-forme PSV. La partie gauche (figure 2A) dans la page d'écran montre la structure arborescente AR d'un service vocal interactif appelé "10 10" qui a été créé au fur et à mesure du renseignement de champs de formulaires FO affichés successivement dans la partie droite (figure 2B) de la page d'écran.

Dans la partie gauche de page d'écran, l'icône "haut-parleur" désigne des informations vocales diffusées (Label) telles que commentaires, titres ou instructions, l'icône en forme d'un dossier ouvert désigne l'accès au contenu d'un menu ou d'un sous-menu, et l'icône en forme de touche carrée désigne l'invitation vocale à une branche dans un choix, telle que la sollicitation d'une touche de clavier 1 à 4 d'un terminal ou poste téléphonique d'usager TU, ou bien encore le retour à un menu appelant ou la fin (quitter) du service vocal interactif créé.

Dans la partie droite (figure 2B) de la page d'écran PE, un formulaire peut contenir un bouton "DTMF" (Dual Tone MultiFrequency) pour sélectionner le numéro d'une touche de clavier de terminal téléphonique TU en correspondance avec une information telle que "Donne chat" comme montré dans le formulaire FO à la figure 2B, ou avec des instructions (Label) qui sont saisies ou ont été saisies au clavier du terminal d'administrateur TA et enregistrées en un fichier texte tel que "annonce5.txt" à télécharger dans le module M1 et à mémoriser et synthétiser vocalement dans le module de synthèse vocale du serveur SVI, ou avec des instructions qui sont ou ont été prononcées directement par l'administrateur devant le microphone du terminal TA et enregistrées en un fichier audio tel que "annonce3.wav" à télécharger dans le module M1 et à lire ultérieurement dans le serveur SVI.

L'administrateur peut également choisir un fichier son tel que "annonce2.wav" ou un fichier texte tel que "annonce4.txt" désigné par son adresse URL (Uniform Resource Locator) et inclus dans un terminal ou autre plate-forme, telle qu'une plate-forme PFD de documents vocaux et/ou textuels reliés au réseau internet RP, comme montré à la figure 1. Egalement en association avec l'une des informations précédentes, un formulaire FO peut contenir des champs pour préciser les dates de validité de début (A partir de) et de fin (Jusqu'au), ou une ou des dates de validité pendant lesquelles l'information est disponible, en l'occurrence le don d'un chat.

Ainsi, grâce au défilement des formulaires FO commandés par l'administrateur dans le terminal TA, celui-ci choisit des éléments du service vocal à créer, tels que des menus, des choix dans un menu, la diffusion d'informations, etc. Les éléments disponibles correspondent à des balises (tags) du langage SVML selon l'invention et sont définis aux annexes 1 et 2 de la présente description. A titre d'exemple, le script du service vocal interactif correspondant à la structure arborescente AR montrée à la figure 2A est écrit en langage SVML à l'annexe 3 de la présente description.

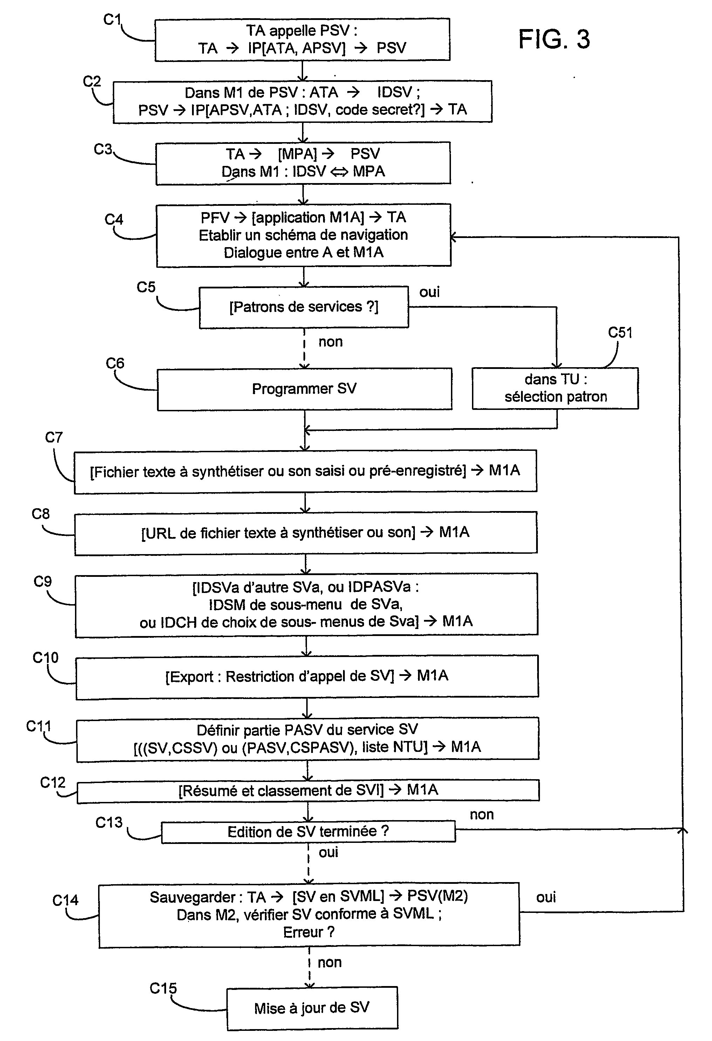

La syntaxe du langage SVML est sensiblement analogue aux langages connus du type ML (Markup Language) tel que le langage hypertexte HTML (HyperText Markup Language). Parmi les diverses balises définies avec leurs attributs dans l'annexe 1 d'une manière quelque peu similaire à des balises dans des langages de haut niveau connus, il sera noté les caractéristiques suivantes propres à l'invention :
- l'attribut export = "true/false" peut être un attribut de la balise "svml" encadrant un service vocal selon l'invention afin de restreindre l'accès à celui-ci, c'est-à-dire afin d'autoriser (true) ou interdire (false) un appel de ce premier service depuis un appel par un autre service vocal au moyen d'un identificateur du premier service ; l'attribut export peut être également celui d'une balise de choix (choice) ou d'une balise de menu afin qu'en fonction de la politique d'accès à un service vocal, une partie de ce service correspondant à un choix ou à un menu soit accessible ou non depuis un autre service vocal selon l'invention au moyen d'un identificateur de ladite partie ; grâce à des attributs export = "true" dans des parties de plusieurs services contenant chacune l'identificateur de la partie suivante, des parties de services vocaux peuvent être autorisées à être exécutées en cascade ;
- les attributs begin = "date début validité", end = "date fin validité" et validdate = "date de validité" désignent relativement à une donnée, respectivement des dates entre lesquelles la donnée est diffusée depuis la plate-forme PSV, et une date de validité de la donnée qui ne peut être utilisée avec aucun des deux attributs précédents ; ces attributs sont introduits dans les balises choix, donnée (data), défaut (default), au revoir (goodbye) et bienvenue (welcome), par le terminal TA dans la plate-forme PSV au cours d'étapes d'édition ultérieures C51 ou C6 (figure 3) ; par exemple, les deux premiers attributs indiquent le début et la fin d'une période promotionnelle d'un produit ou d'une période d'inscription à une activité, et le troisième attribut indique la date de fermeture d'un magasin ou l'absence d'un service déterminé ;
- l'attribut txt = "référence fichier texte" pouvant être inclus dans les balises action, données, défaut, au revoir, description (label), paramètre et bienvenue est utilisé pour saisir une référence d'un fichier de texte dans le terminal d'administrateur TA afin que le texte dans le fichier soit ultérieurement synthétisé automatiquement dans le serveur SVI et ainsi constituer une information ou une instruction qui sera diffusée vers un terminal d'usager TU ;
- l'attribut passwd = "suite de chiffres" qui peut être inclus dans la balise menu ou svml désigne un code secret CSSV ou CSPASV saisi par l'administrateur A afin de protéger l'accès au service créé lui-même dont le fichier est compris entre deux balises svml, ou l'accès à une partie de ce service entre deux balises menu ;
- la balise défaut <default> est utilisée pour signaler par la diffusion d'une donnée, telle que l'absence d'un produit ou d'une activité, qu'aucune des données du choix n'a pu être diffusée à cause de dates de validité, par exemple pendant une indisponibilité de produit ou une absence d'activité ;
- la balise d'appel <gosub> crée un lien avec un menu ou un sous-menu dans un service vocal afin d'exécuter le sous-menu, tel que "contenus_externes", dans un menu du service lui-même désigné par l'attribut src = "#menu_id" dans lequel menu_id désigne un identificateur de sous-menu IDM dans le fichier du service édité SV ; ou la balise <gosub> crée un lien avec un autre service vocal interactif personnalisé (SVIP) à appeler implémenté dans la plate-forme PSV ou dans une autre plate-forme selon l'invention et désigné par un identificateur "num", tel que "10 11", selon l'attribut src = "svip://svip_num", ou bien avec une partie de l'autre service vocal désignée par un identificateur "menu_id", tel que "menu_entree", selon l'attribut src = "svip://svip_num≠menu_id", ou bien encore avec un choix dans un menu de l'autre service vocal désigné par un identificateur "choice_nb", tel que "3", pour choisir l'option 3 dans le menu "entree" dans le service 10 11 selon l'attribut src = "svip://svip_num≠menu_id:choice_nb" ; lorsque l'autre service vocal appelé "num", désigné dans la suite par SVa, est implémenté dans une autre plate-forme PSVa (figure 1) de gestion de services vocaux selon l'invention, l'identificateur du service vocal appelé est associé à l'adresse URL de la plate-forme PSVa et à l'identificateur du chemin dans la plate-forme PSVa pour atteindre le service vocal appelé ; la balise d'appel (gosub) constitue ainsi un appel dans le service vocal édité SV pour appeler et lancer un autre service vocal SVa ou au moins une partie de celui-ci afin que cet autre service vocal ou la partie de cet autre service vocal soit exécuté au cours de l'exécution du service vocal édité qui est appelé depuis un terminal d'usager TU à travers le serveur vocal interactif SVI, ou bien qui est appelé par un autre service vocal et ainsi de suite ;
- la balise de retour <return> est obligatoire pour quitter un service vocal appelé, ou un menu ou choix appelé, c'est-à-dire une partie de service appelée, afin de retourner dans le service appelant ayant appelé le service ou la partie appelée, là où il a été interrompu.

Comparativement à des services audio connus, tels que "la météo" désigné par un numéro de téléphone, la balise de retour selon l'invention permet de retourner successivement à des services vocaux interactifs appelés en cascade, suivant la direction "contraire" à la balise d'appel <gosub>. La balise d'appel introduit dans un service appelant pour appeler un service appelé par l'identificateur de ce dernier et la balise de retour introduit dans le service appelé pour retourner au service appelant constitue un véritable lien entre les services vocaux permettant une navigation dans les services. Grâce à de tels liens, l'invention constitue un réseau de services vocaux interactifs dans lesquels un usager peut naviguer depuis son terminal TU.

Le premier **module M1** dans la plate-forme de services vocaux PSV garantit que le service vocal interactif édité est conforme à l'organisation générale de services selon l'invention permettant le partage de données et une navigation entre les services. Des éléments créés du service ne peuvent être insérés qu'à certaines positions dans la structure arborescente du service, selon les contraintes définies aux annexes 1 et 2. Le code SVML qui est une instance du langage XML (extensible Markup Language) est généré automatiquement par un module d'application d'édition M1A téléchargé dans le terminal TU, ou bien est écrit directement par l'administrateur dans le terminal TA, avant d'être sauvegardé dans le module M1 de la plate-forme. Chaque noeud de la structure arborescente est décrit sous forme statique ou dynamique via un identificateur, qui peut faire référence à des codes SVML pour un noeud non terminal de la structure, ou à du contenu textuel qui sera synthétisé ultérieurement en parole automatiquement dans un serveur vocal interactif SVI, ou à un fichier audio dans le cas d'une feuille de la structure arborescente.

Un service vocal créé selon l'invention correspond ainsi à un fichier racine en langage SVML.

En référence maintenant à la figure 3, **l'édition d'un service vocal interactif** selon l'invention par un administrateur devant le terminal TA comprend essentiellement des étapes C1 à C14.

A l'étape C1, le terminal TA appelle la plate-forme de services vocaux PSV en transmettant un paquet IP avec l'adresse de source ATA du terminal TA et l'adresse de destination APSV de la plate-forme PSV via le réseau internet RP. Après cette connexion entre terminal TA et plate-forme PSV, le module M1 impose ou invite à composer un identificateur IDSV d'un service vocal interactif SV à éditer et impose à déterminer un mot de passe d'administrateur MPA à l'étape C2. Le mot de passe de l'administrateur A est transféré depuis le terminal TA et mémorisé dans le module M1 en correspondance avec l'identificateur de service vocal IDSV à l'étape C3. Le mot de passe mémorisé devra être saisi ultérieurement après la saisie de l'identificateur de service vocal IDSV dans le terminal TA chaque fois que l'administrateur souhaitera accéder au service vocal interactif SV édité, notamment pour une modification de celui-ci. La base de données BD associée à la plate-forme PSV contient une première table de correspondance T1 (figure 1) faisant correspondre des identificateurs IDSV de services vocaux interactifs édités ou en cours d'édition et les mots de passe MPA des administrateurs.

Puis à l'étape C4 le module M1 télécharge le module d'application d'édition M1A dans le terminal TA pour passer à l'édition proprement dite d'un service vocal interactif SV afin que l'administrateur A établisse un schéma de navigation arborescent en dialoguant avec le module téléchargé M1A sans intervention de la plate-forme PSV. Par exemple, le module M1 est implémenté dans la plate-forme PSV en langage JavaScript afin que le module M1A soit utilisé par un navigateur web connu implémenté dans le terminal d'administrateur TA. La description graphique du service par l'intermédiaire de formulaires renseignés FO est traduite automatiquement en langage SVML selon l'invention dans le module M1A. Le module M1A peut proposer à l'administrateur une édition de service vocal en le guidant selon l'un sélectionné de patrons arborescents de navigation de service vocal pré-mémorisés comme indiqué aux étapes C5 et C51, notamment par l'intermédiaire de pages d'écran comme celle montrée aux figures 2A et 2B, la partie droite de page étant renseignée pour chaque formulaire FO et la partie gauche de page visualisant la formation progressive de la structure arborescente AR du service en cours d'édition. Selon une autre variante, le module M1A invite l'administrateur à programmer lui-même le service vocal SV à éditer en langage SVML, comme indiqué à l'étape C6.

Au cours de la construction de la structure arborescente de navigation AR du service vocal interactif SV formaté en langage SVML dans le module M1A, l'administrateur peut être conduit à effectuer l'une des étapes suivantes pour le service vocal SV en langage SVML dans le module M1A via l'interface graphique du terminal TA :
- C7 : introduire dans le service vocal SV dans le module M1 l'identificateur d'un fichier texte ou d'un fichier son qui est saisi directement dans le terminal TA par l'administrateur ou qui est lu lorsqu'il est pré-enregistré dans le terminal TA, en correspondance avec l'attribut txt ou snd afin de le télécharger avec le service SV dans la plate-forme PSV lors de la sauvegarde du service, et ultérieurement de le mémoriser et éventuellement le synthétiser en un fichier vocal si le fichier initial est textuel dans le serveur vocal interactif SVI au cours de l'exécution du service ;
- C8 : introduire dans le service vocal SV dans le module M1A l'adresse URL d'un fichier texte à mémoriser et synthétiser ultérieurement en un fichier vocal dans le serveur SVI au cours de l'exécution du service, ou l'adresse URL d'un fichier son, afin que ce fichier soit reproduit ultérieurement lors de l'exécution du service créé SV, ce qui correspond à l'attribut txt ou snd, le fichier texte ou son étant disponible par exemple dans une autre plate-forme de documents éloignée PFD (figure 1) reliée au réseau RT ;
- C9 : introduire dans le service vocal SV dans le module M1A au moins l'identificateur IDSVa d'un autre service vocal SVa selon l'invention, ou l'identificateur de partie de service IDPASVa tel que l'identificateur IDSM d'un sous-menu d'un autre service vocal SVa, ou l'identificateur IDCH d'un choix de sous-menus d'un autre service vocal SVa, afin de créer un lien entre les services SV et SVa au moyen de la balise d'appel (gosub) et plus généralement introduire plusieurs identificateurs d'autres services dans le service SV afin de mettre en réseau plusieurs services ; le module M1A facilite la recherche des identificateurs d'importation en classant les services vocaux à importer par thèmes, tel que sports, météo, bourse, actualités, etc., et par éditeurs grâce à un classement des services créés comme on le verra ci-après à l'étape C11 ;
- C10 : a contrario, au lieu d'importer un autre service vocal ou une partie de celui-ci dans le service SV, restreindre l'appel du service vocal SV ou l'appel au moins d'une partie PASV du service vocal SV après son édition par d'autres services SVa dans lesquels le service SV ou une partie de celui-ci est appelé ; cette restriction d'appel est signalée dans le service SV par l'état de l'attribut export dans les balises de service svml, ou de menu ou de choix pour autoriser (true) ou interdire (false) l'appel du service SV, ou d'une partie PASV de celui-ci tel qu'un menu ou un choix de sous-menus ;
- C11 : fournir un code secret prédéterminé CSSV ou CSPASV pour l'associer au service SV en cours d'édition, en correspondance à l'identificateur IDSV, dans le module M1A, ou pour l'associer à une partie PASV du service SV en correspondance à l'identificateur IDPASV dans le module M1A ; ces correspondances sont téléchargées dans une deuxième table T2 de la base de données BD dans la plate-forme PSV lors de la sauvegarde du service SV, comme montré à la figure 1 ; la deuxième table T2 peut également faire correspondre à chacun des couples d'identificateur et de code d'accès secret (IDSV, CSSV), (IDPASV, CSPASV) de services vocaux créés et de parties PASV de services vocaux une liste respective de numéros téléphoniques NTU de terminaux d'usager TU qui sont autorisés à accéder au service SV ou à la partie de service PASV, laquelle liste est tenue à jour par l'administrateur A du service SV ; seulement les usagers désignés dans la liste précédente peuvent alors consulter le service vocal ou une partie de celui-ci ; ultérieurement, l'administrateur A du service SV met à jour la liste en ajoutant ou supprimant des numéros téléphoniques d'usager pour autoriser ou interdire l'accès au service ou à une partie de celui-ci à des usagers désignés par leurs numéros d'appel de terminal téléphonique NTU afin que notamment par ce biais, l'administrateur du service facture l'accès au service SV par un abonnement ; l'accès au service vocal correspondant ou à la partie de service vocal correspondant est ainsi limité par un code secret CSSV, CSPASV et/ou par une appartenance d'un numéro NTU à la liste correspondante.

La gestion ultérieure des paramètres et notamment des listes dans la table T2 est réalisée par le deuxième module M2 dans la plate-forme PSV.

Finalement, lorsque l'administrateur A a décrit la structure arborescente AR du service créé, par exemple comme montré à figure 2A, le module M1A l'invite à le décrire brièvement en fournissant un résumé vocal, ou textuel ultérieurement à synthétiser vocalement par le serveur SVI, qui sera transmis à tous les usagers appelant le service vocal créé. Le module M1A classe le service vocal édité formaté en langage SVML dans au moins une classe de thème et une classe d'éditeur, à l'étape C12.

Quand le service vocal SV est entièrement défini comme indiqué à l'étape C13, l'administrateur A valide à l'étape C14 l'édition du service SV en langage SVML afin que le service SV soit sauvegardé et vérifié dans la base de données BD sous le contrôle du module M2.

Le deuxième **module M2** dans la plate-forme PSV est écrit par exemple en langage C++ et joue le rôle d'un "compilateur" du langage SVML en langage VXML. Ultérieurement, ce compilateur traduit automatiquement la description du service vocal interactif SV édité précédemment en langage SVML en le langage VXML compatible avec le serveur vocal SVI pour transmettre le service SV en langage VXML au serveur SVI lorsque le service SV est appelé depuis un terminal d'usager TU dans la base de données BD. A l'étape C14, le module M2 vérifie si le code SVML produit pour le service créé SV, par exemple selon l'annexe 3, est conforme aux règles énoncées à l'annexe 1 ; le cas échéant, le module M2 signale via le réseau RP certaines erreurs dans le code SVML du service vocal édité SV au terminal d'administrateur TA afin de les corriger, notamment lorsque l'administrateur a procédé à l'écriture du service en langage SVML à l'étape C6.

Le module M2 sert également à répondre aux demandes de consultation des services vocaux édités SV depuis les terminaux d'usager TU, et à enregistrer un journal de consultations par service SV qui est lisible par l'opérateur téléphonique offrant les services. En particulier, le module M2 qui gère des numéros téléphoniques NTU de terminaux d'usager TU est capable d'assister à la facturation de l'accès à chaque service par un abonnement par exemple ou toute autre formule de tarification associée au service vocal qui peut être proposée par le module M1A lors de l'édition du service, ou ultérieurement par le module M2. Typiquement, le module M2 associe dans une table T3 de la base de données BD au numéro NTU d'un terminal d'usager TU, des identificateurs de service vocal consulté IDSV ou de partie de service vocal consultée IDPASV et les heures de début et de fin de consultation des services vocaux par le terminal d'usager afin d'en déduire des durées de consultation par services et répartir les recettes de consultation entre les fournisseurs des services vocaux et d'établir des statistiques. La tarification peut consister en un reversement dépendant du nombre d'appels ou de la durée des appels.

Après l'étape C14, le service vocal édité SV est réputé mis à la disposition du public, c'est-à-dire à la disposition de tout usager éventuellement autorisé depuis un terminal téléphonique TU.

Ultérieurement, comme indiqué à l'étape C15 dans la figure 3, l'administrateur s'il le souhaite met à jour le service vocal SV en langage SVML en connectant le terminal TA à la plate-forme PSV. Après validation de l'identificateur IDSV du service en correspondance avec le mot de passe MPA dans la table T1, comme aux étapes C2 et C3, le module M1 transfert le service vocal publié SV afin qu'il soit visualisé dans le terminal TA sur une page d'écran analogue à celle montrée à la figure 2. L'administrateur sélectionne des éléments graphiques du service SV (figure 2A) et modifie les contenus correspondant aux éléments sélectionnés via des formulaires (figure 2B) ; il peut également ajouter ou supprimer une ou plusieurs branches dans la structure arborescente AR du service au moyen d'une barre d'outils et sous contrôle du module téléchargé M1A. A chaque branche ou feuille, le module M1A propose un choix pour enregistrer une nouvelle instruction ou information. Les étapes de modification sont analogues à celles C5 à C12 de l'édition du service, en se basant sur divers paramètres et données déjà spécifiés lors de l'édition du service. Le service vocal ainsi modifié est sauvegardé à la place du précédent dans la base de données BD dans la plate-forme PSV.

En variante, l'administrateur du service créé SV modifie certaines feuilles de son service depuis un terminal téléphonique. A cette fin, l'administrateur appelle un numéro de téléphone réservé aux modifications et correspondant à un serveur vocal analogue au serveur vocal interactif SVI pour les usagers et qui est en relation avec la plate-forme PSV via le réseau internet RP. Pour accéder au service SV, l'administrateur compose l'identificateur de service IDSV et un code secret à plusieurs chiffres déterminé lors de la création du service, correspondant à son compte d'administrateur. Ensuite, l'administrateur navigue dans le service SV comme un usager de terminal téléphonique. Lorsque l'administrateur accède à une branche ou une feuille de l'arbre du service, le module M1 de la plate-forme PSV lui propose un nouveau choix et l'administrateur énonce un nouveau message qui est enregistré dans la base de données BD via le module M1 à la place de l'ancien message. La nouvelle version du service est alors accessible par tout usager de terminal TU après sauvegarde de la nouvelle version dans le module M1 de la plate-forme PSV.

Lors de la mise à jour du service SV, un usager en cours de consultation de ce service ne pourra accéder au service modifié tant que l'usager ou le service consulté par l'usager n'aura pas rappelé le service modifié après la sauvegarde de celui-ci dans le module M2. Par exemple, si le service appelé SV est lié à une partie PASVa d'un autre service, l'usager ne peut pas accéder aux modifications de la partie de service PASVa si celle-ci est en cours de mise à jour lorsque le service SVa est appelé par le service SV au cours de l'exécution de celui-ci et tant que l'instruction de retour vers le service SV dans le service SVa n'a pas été exécutée ; si la partie PASVa est de nouveau appelée par le service SV après que la nouvelle version de la partie PASVa ait été sauvegardée, alors le service SV accédera à la partie modifiée PASVa selon la nouvelle version.

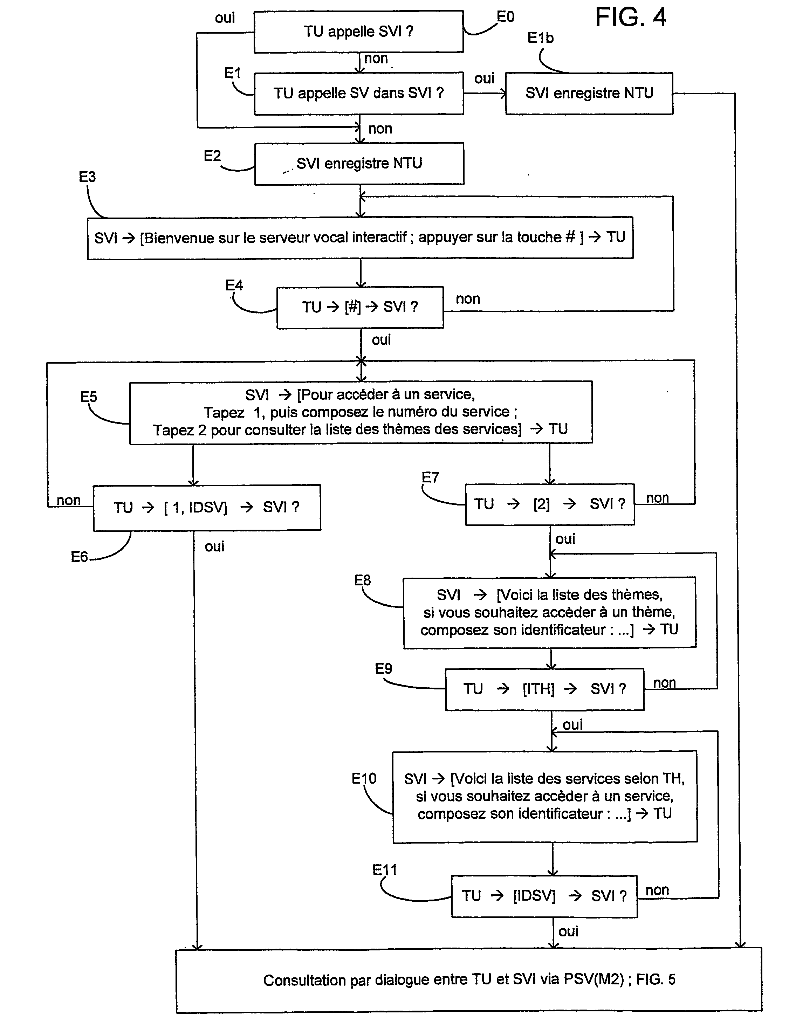

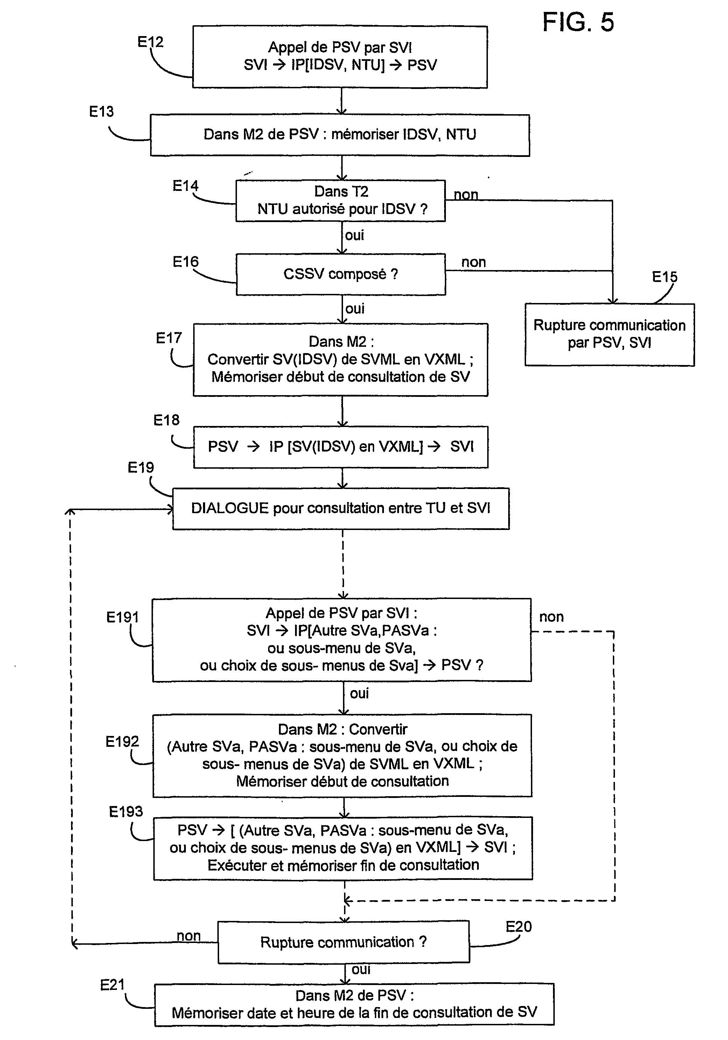

Pour sélectionner et consulter un service vocal SV mémorisé dans la base de services vocaux interactifs BD de la plate-forme PSV, une communication est établie entre un terminal téléphonique d'usager TU et le serveur vocal interactif SVI à travers le réseau d'accès RA, comme montré à la figure 4, et une communication est établie entre le serveur SVI et la plate-forme de services vocaux PSV, comme montré à la figure 5.

Le **serveur SVI** est une plate-forme qui interprète le langage VXML dans chaque service vocal interactif SV qui est sélectionné par un usager et fourni dynamiquement par le module M2 de la plate-forme PSV après conversion du langage.SVML en langage VXML dans le module M2 afin de le rendre disponible à l'usager appelant.

Comme montré à la figure 4, la **sélection d'un service vocal interactif** SV depuis un terminal d'usager TU comprend essentiellement des étapes E0 à E11.

Le terminal TU appelle classiquement le serveur vocal interactif SVI à travers le réseau d'accès RA, par exemple le réseau téléphonique commuté, après que l'usager ait composé sur le clavier du terminal TU le numéro de téléphone du serveur SVI à l'étape E0. Le serveur SVI enregistre ensuite le numéro téléphonique NTU du terminal TU afin, le cas échéant, de faire vérifier dans la base de données BD par le module M2 à une étape ultérieure E14 que le numéro NTU est contenu dans une liste de numéros autorisés dans la table T2 en correspondance avec un service SV ou une partie de service PASV.

En variante, comme indiqué aux étapes E1 et Elb, l'usager compose dans le terminal TU un numéro téléphonique NSV pour appeler directement le service vocal SV de son choix dans le serveur SVI qui enregistre le numéro NTU et fait correspondre le numéro de service NSV à l'identificateur IDSV afin d'appeler immédiatement le serveur SVI dans la plate-forme PSV, comme on le verra à l'étape E12 à la figure 5.

Aux étapes E3 et E4 succédant à l'appel du serveur SVI, le serveur SVI transmet un message vocal de bienvenue au terminal TU et invite l'usager à accéder à un service vocal en appuyant sur une touche prédéterminée, telle que la touche dièse.

En réponse à la sollicitation de la touche dièse, le serveur SVI propose de composer le numéro ou tout identificateur IDSV associé à un service SV que l'usager connaît déjà en sollicitant une première touche, telle que la touche "1", ou de consulter l'ensemble des services classés par thème en sollicitant une deuxième touche prédéterminée, telle que la touche "2", à l'étape E5.

Si à l'étape suivante E6, le terminal TU transmet en code DTMF le numéro "1" de la première touche sollicitée suivi de l'identificateur IDSV d'un service au serveur SVI, le procédé de sélection passe directement à l'étape E12 à la figure 5.

En revanche, si l'usager a sollicité la deuxième touche prédéterminée "2" dans le terminal TU comme indiqué à l'étape E7, le serveur SVI transmet un message vocal pour présenter la liste des thèmes et leurs identificateurs et inviter l'usager à composer l'identificateur de thème ITH correspondant à son choix à l'étape E8. En réponse à un identificateur de thème ITH transmis par le terminal d'usager TU au serveur SVI à l'étape E9, le serveur SVI invite l'usager à sélectionner un service parmi une liste de services avec leurs identificateurs selon le thème choisi TH, en composant l'identificateur IDSV du service choisi SV, à l'étape E10. Puis en réponse à l'identificateur IDSV du service sélectionné SV à l'étape E11, le procédé passe aux étapes de **consultation du service vocal choisi** SV par dialogue entre le terminal TU et le serveur vocal SVI via la plate-forme PSV, comme montré à la figure 5.

En réponse à l'identificateur IDSV du service vocal SV choisi par l'usager et transmis au serveur SVI à l'étape E6 ou E11, le serveur SVI mémorise l'identificateur IDSV du service choisi SV en association avec le numéro téléphonique NTU du terminal d'usager TU et les transmet dans un paquet d'appel IP à la plate-forme PSV à l'étape E12. Le module M2 dans la plate-forme PSV mémorise le couple IDSV-NTU à l'étape E13. Le module M2 vérifie préalablement à l'étape E14 si l'usager désigné par le numéro NTU est autorisé à consulter le service sélectionné désigné par l'identificateur IDSV dans la table T2. Si le numéro NTU n'est pas trouvé en correspondance avec l'identificateur IDSV dans la table T2, l'usager n'est pas autorisé à consulter le service sélectionné et la plate-forme PSV rompt la communication avec le serveur SVI qui rompt la communication avec le terminal d'usager TU à l'étape E15. Dans le cas contraire, l'usager est invité éventuellement à composer le code d'accès confidentiel CSSV à l'étape E16 que reçoit le module M2 via le serveur SVI afin de le comparer à celui inscrit en correspondance avec l'identificateur IDSV dans la table T2. Si le code composé CSSV est incorrect, la communication est rompue à l'étape E15.

Sinon, lorsque l'usager a été autorisé à consulter le service vocal sélectionné SV désigné par l'identificateur IDSV à l'étape E14 et a composé éventuellement le code confidentiel CSSV correctement à l'étape E16, le programme du service sélectionné SV désigné par l'identificateur IDSV et écrit en langage SVML dans la base de données BD est convertit par le module M2 en le langage VXML compatible avec le serveur vocal SVI à l'étape E17. A cette étape, la date et l'heure du début de la consultation en cours sont enregistrées. La plate-forme PSV transmet par des paquets IP le programme du service sélectionné SV en langage VXML au serveur SVI à l'étape E18 afin que s'instaure un dialogue entre le terminal TU et le serveur SVI conformément à une navigation dans le service vocal choisi SV à l'étape E19. Par exemple, la consultation du service décrit à l'annexe 3 s'effectue selon la structure arborescente AR montrée à la figure 2A.

Comme montré par les étapes E191, E192 et E193 dans la figure 5, au cours du déroulement du service vocal sélectionné SV dans le serveur vocal interactif SVI sur la base du langage VXML et donc de la navigation de l'usager dans le service sélectionné SV, le serveur SVI peut être conduit à appeler la plate-forme PSV ou une autre plate-forme selon l'invention afin de consulter un autre service vocal SVa, ou une partie PASVa de cet autre service vocal SVa, telle qu'un sous-menu ou un choix de sous-menus, si l'identificateur IDSVa, IDPASVa est lié à une balise d'appel <gosub> incluse dans le programme du service sélectionné SV et si aucun attribut export à l'état "false" interdit l'accès au service appelé SVa ou à la partie appelée PASVa. Le module M2 dans la plate-forme appelée PSV convertit dynamiquement l'autre service SVa ou la partie de service PASVa telle que le sous-menu ou le choix de sous-menus du service SVa écrit initialement en langage SVML et enregistre la date et l'heure de début de la consultation du service SVa ou de la partie PASVa. La plate-forme PSV transmet le service SVa ou la partie PASVa appelé via des paquets IP au serveur interactif SVI. Le serveur SVI exécute l'autre service SVa ou la partie PASVa transmis pour une consultation dudit autre service SVa ou de ladite partie, c'est-à-dire pour consulter un sous-menu du service SVa ou pour sélectionner un choix de menus ou de sous-menus dans l'autre service SVa, puis retourne à l'exécution du service sélectionné SV. La fin de la consultation de service SVa ou PASVa est également enregistrée dans le module M2.

D'une manière analogue aux étapes E191 à E193, le serveur SVI peut être sollicité pour appeler un fichier texte à synthétiser dans le module de synthèse vocale du serveur, ou un fichier son pré-enregistré désigné par une adresse URL, via la plate-forme PSV.

Finalement à la rupture de la communication entre le terminal TU et le serveur SVI, qui est relayée par une rupture de la communication entre le serveur SVI et la plate-forme PSV à l'étape E20, le module M2 dans la plate-forme PSV mémorise la date et l'heure de la fin de la consultation afin d'en déduire à l'étape E21, en fonction de la date et de l'heure du début de consultation, la durée de la consultation et de facturer le cas échéant l'usager et répartir la recette de cette consultation entre les administrateurs des services et parties de services consultés.

### ANNEXE 1 : Syntaxe du langage SVML (Simple Voice Markup Language)

Les attributs ou balises soulignés sont obligatoires.

Le format des dates est "jj/mm/aaaa hh:mm:ss" (jour/mois/année heure:minute:seconde). On peut définir de 1 à n valeurs (par exemple "jj/mm") ; dans ce cas les valeurs manquantes dont remplacées par les valeurs courantes. Pour forcer une valeur de jj/mm/aaaa à la valeur courante on peut aussi utiliser 0 : par exemple "0/12/0 10:20" désigne le mois de décembre de l'année courante à 10h20.

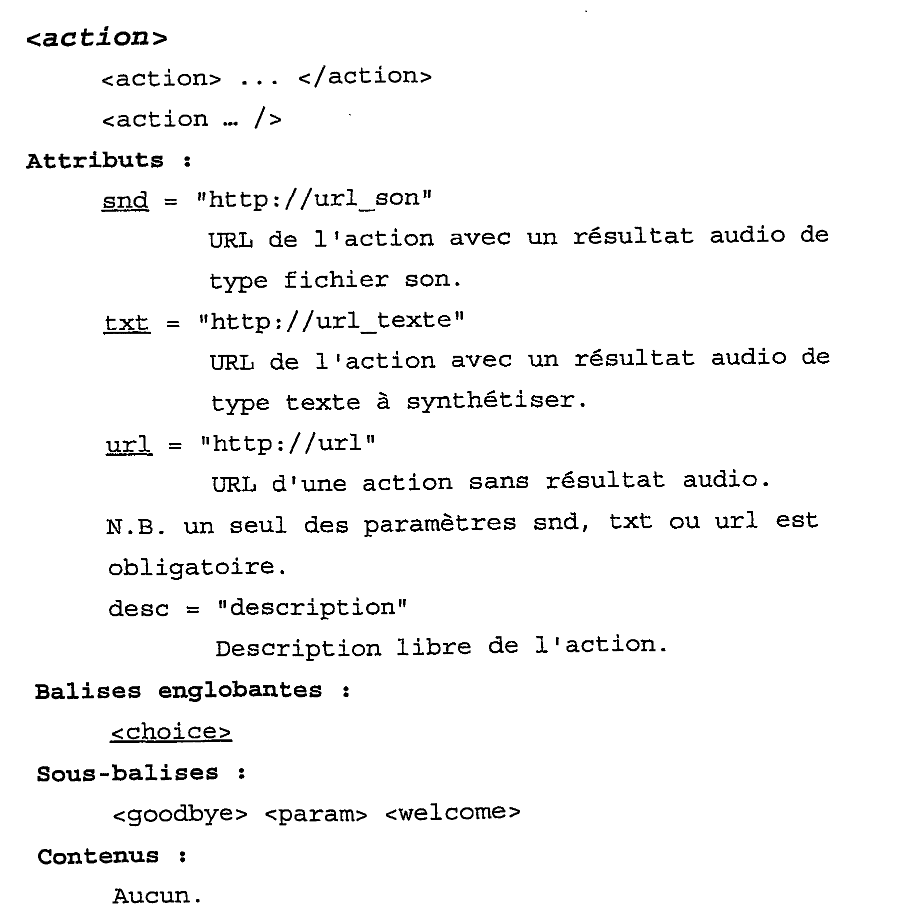

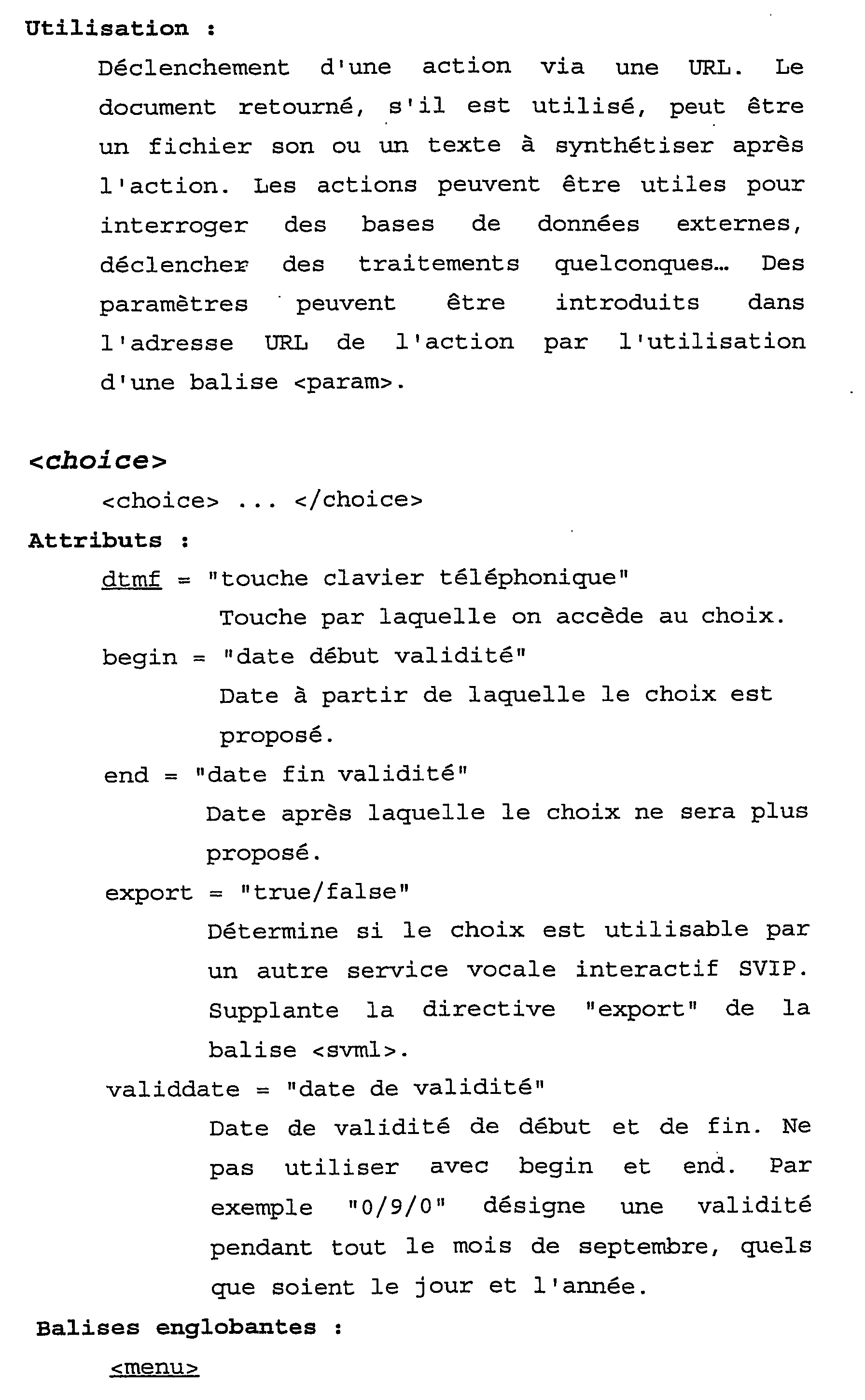

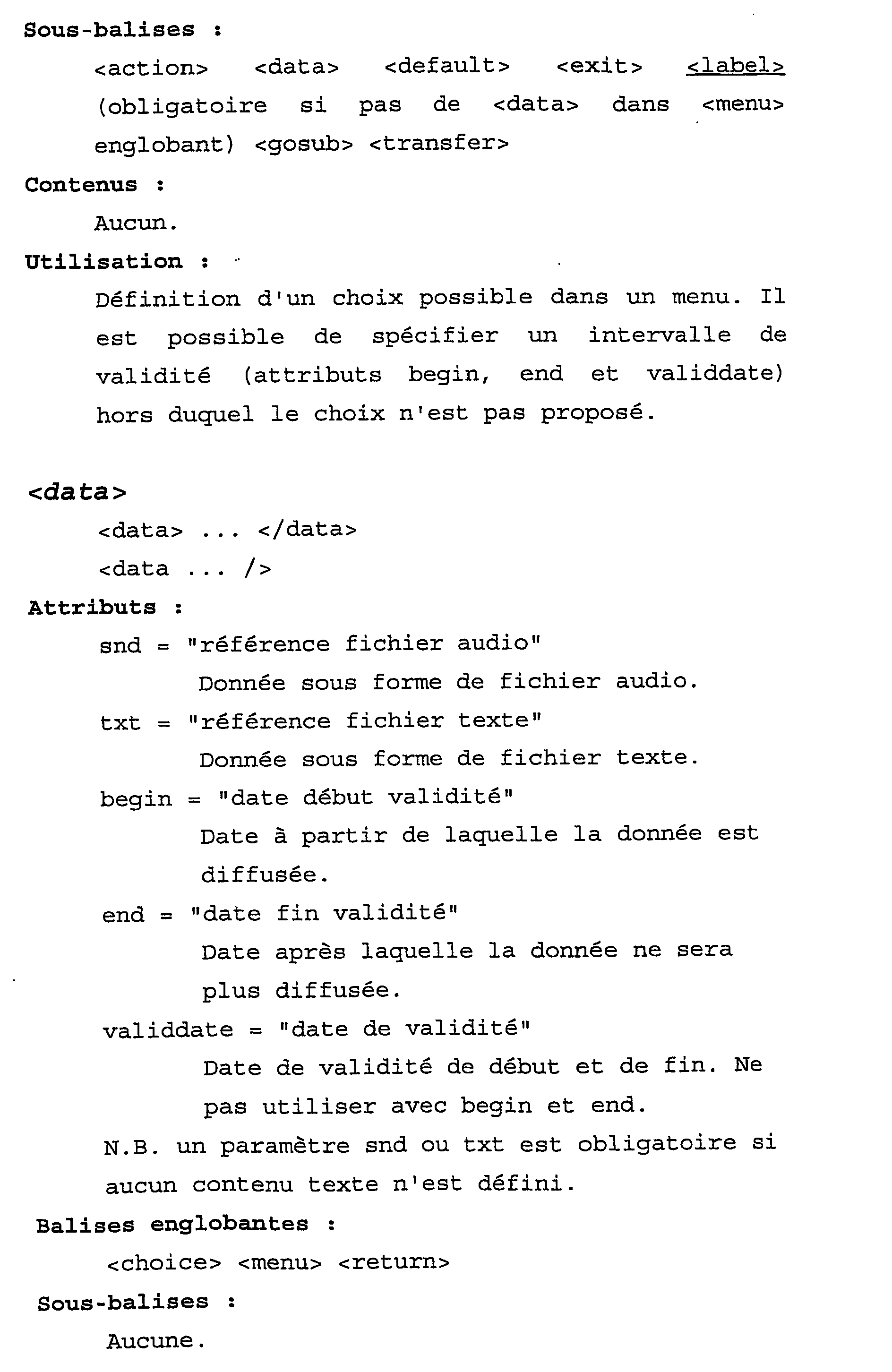

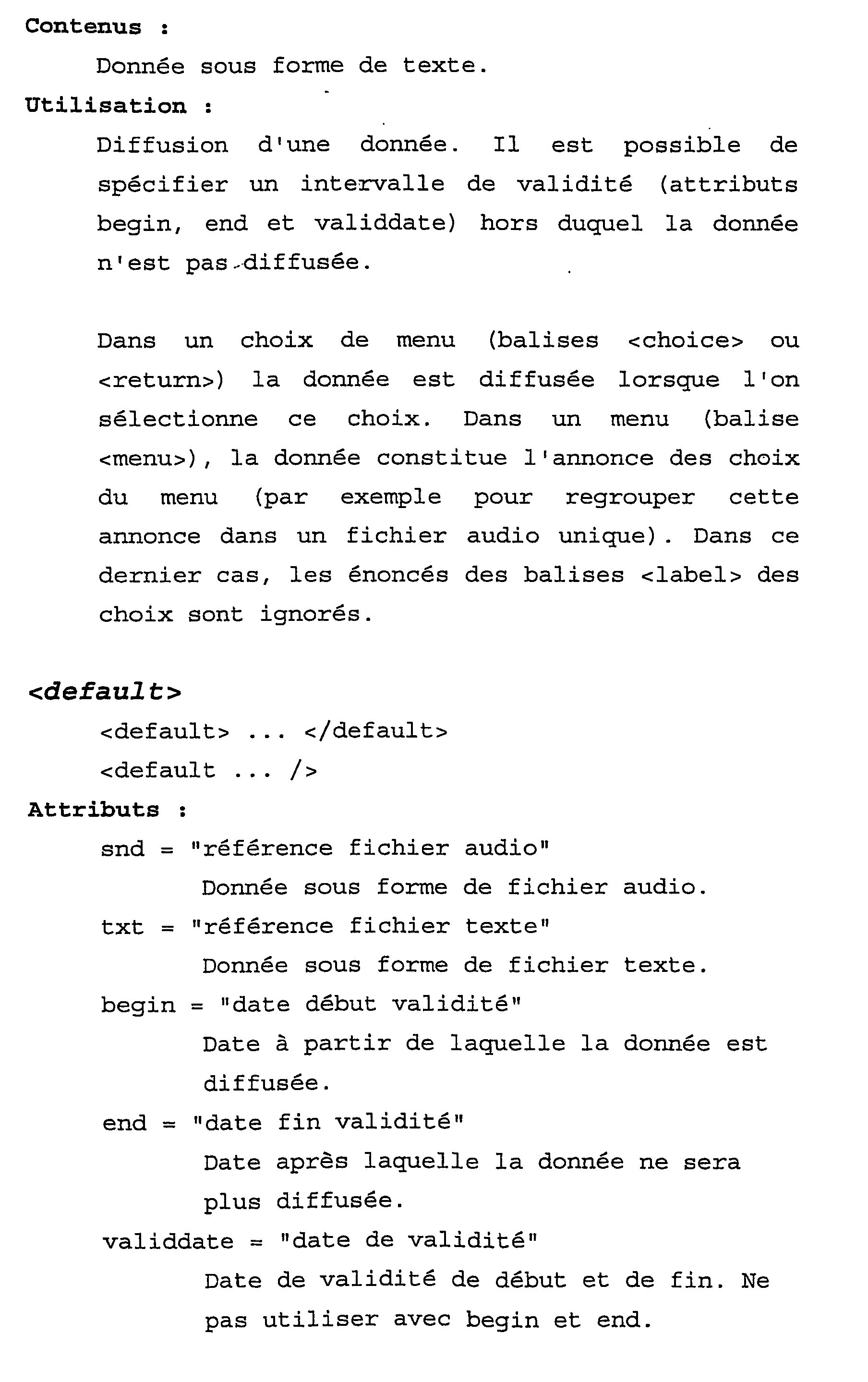

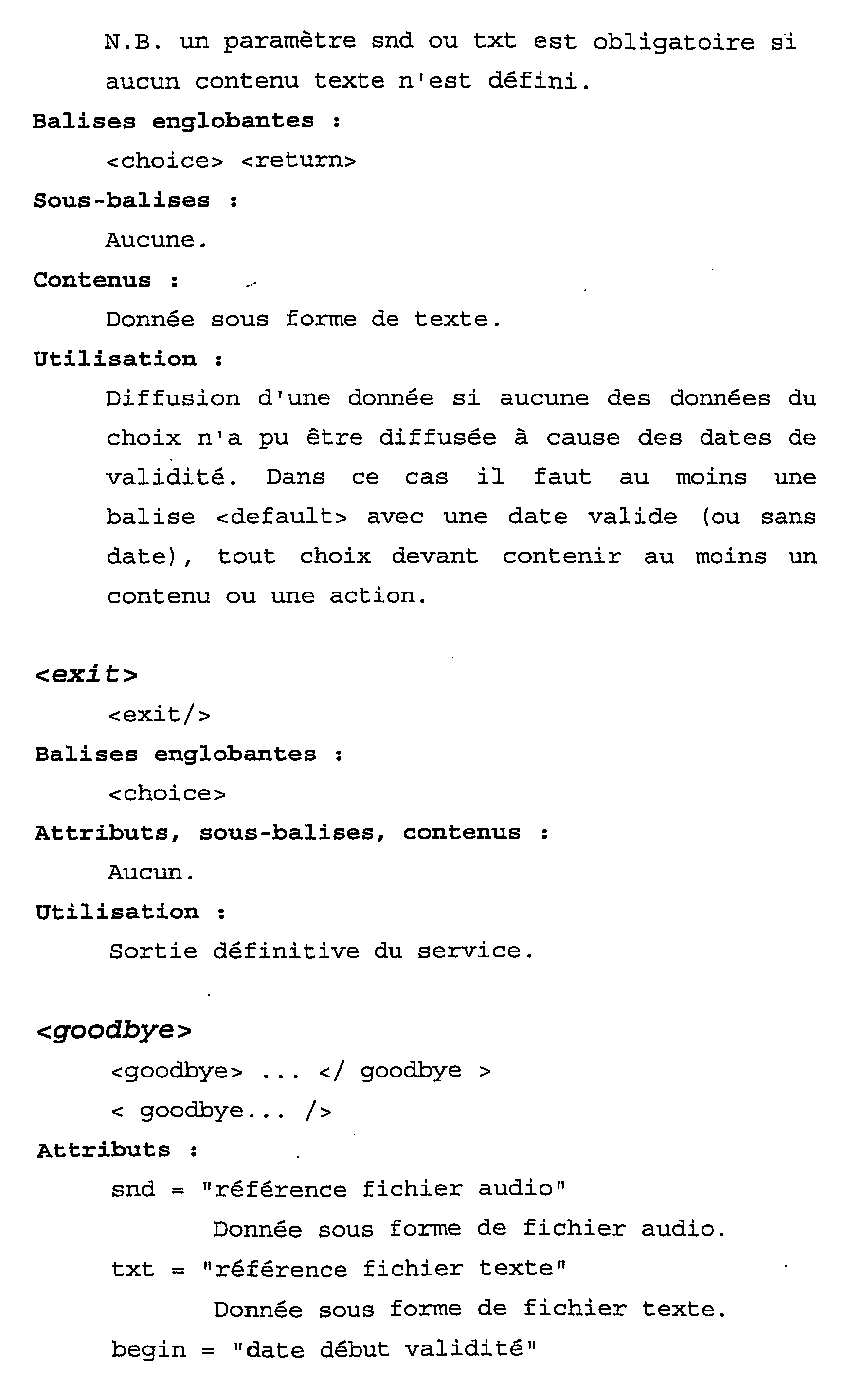

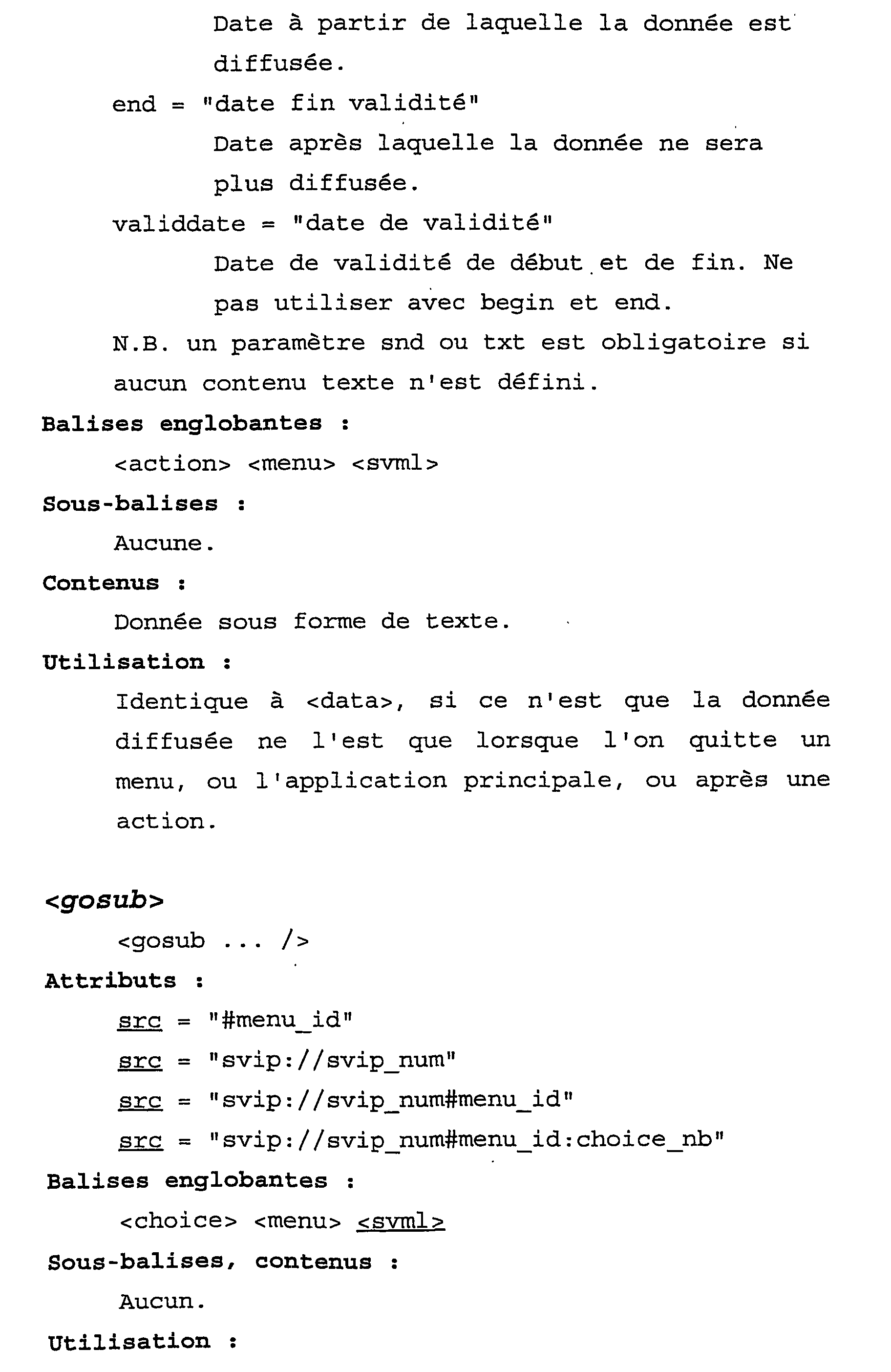

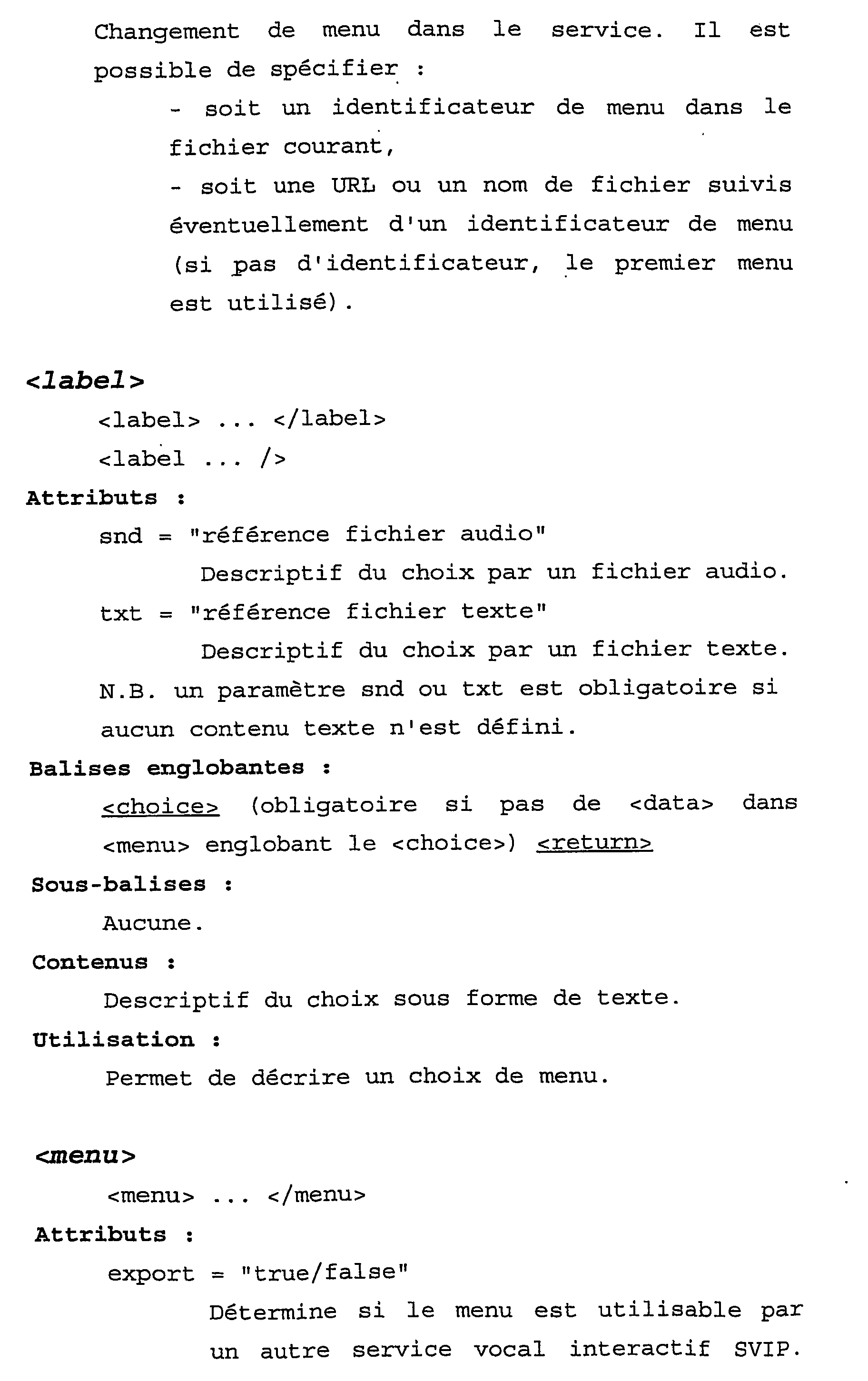

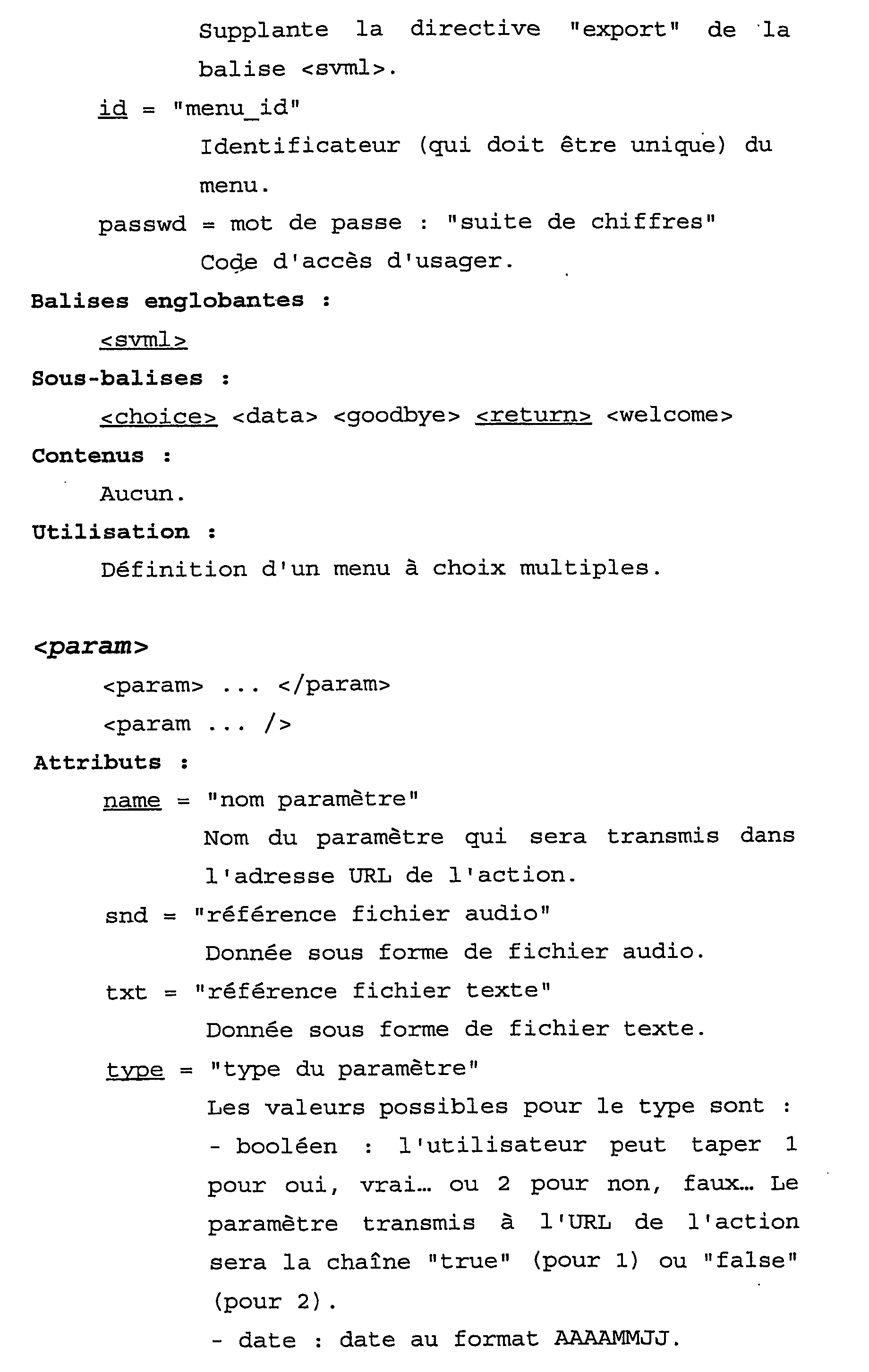

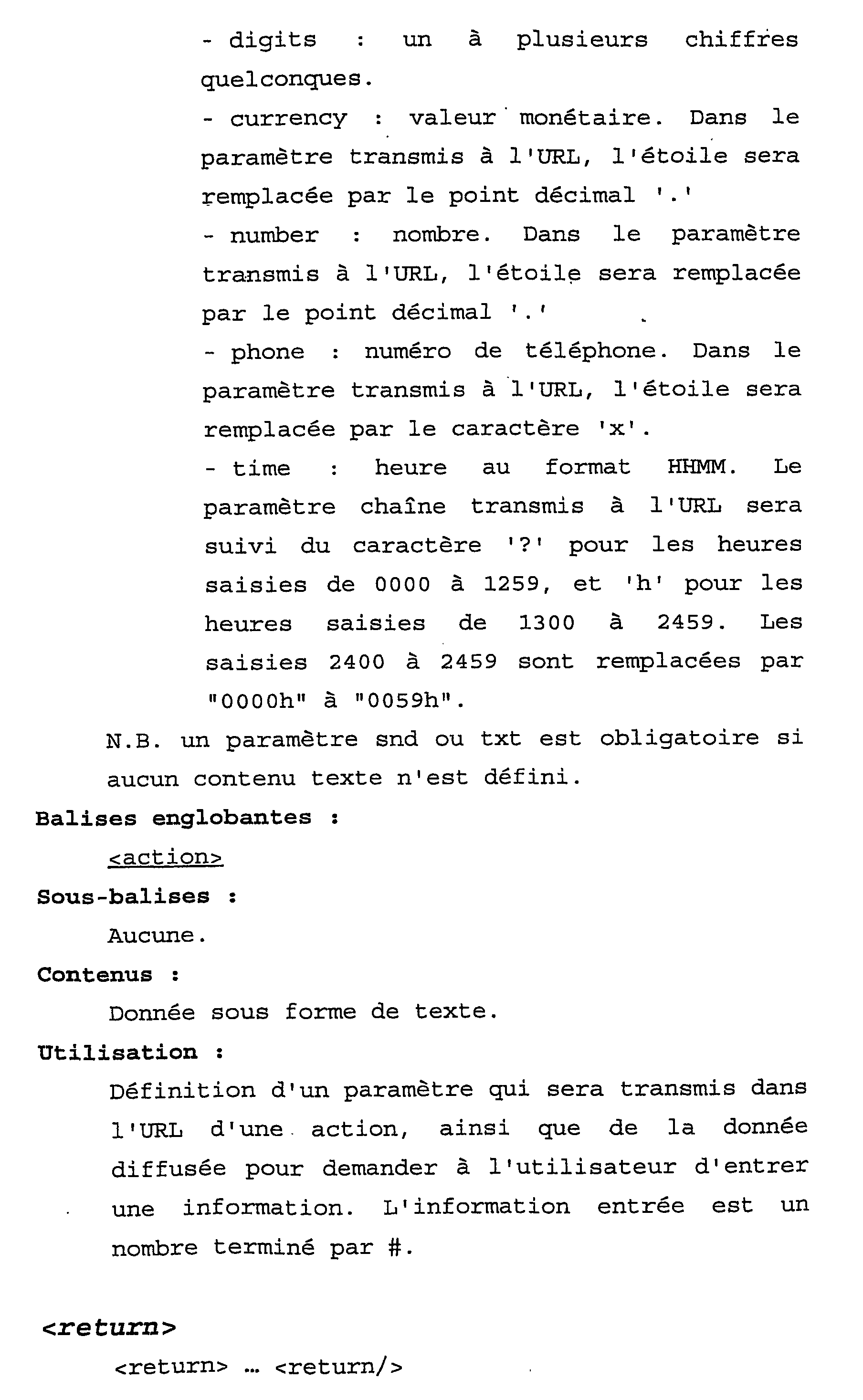

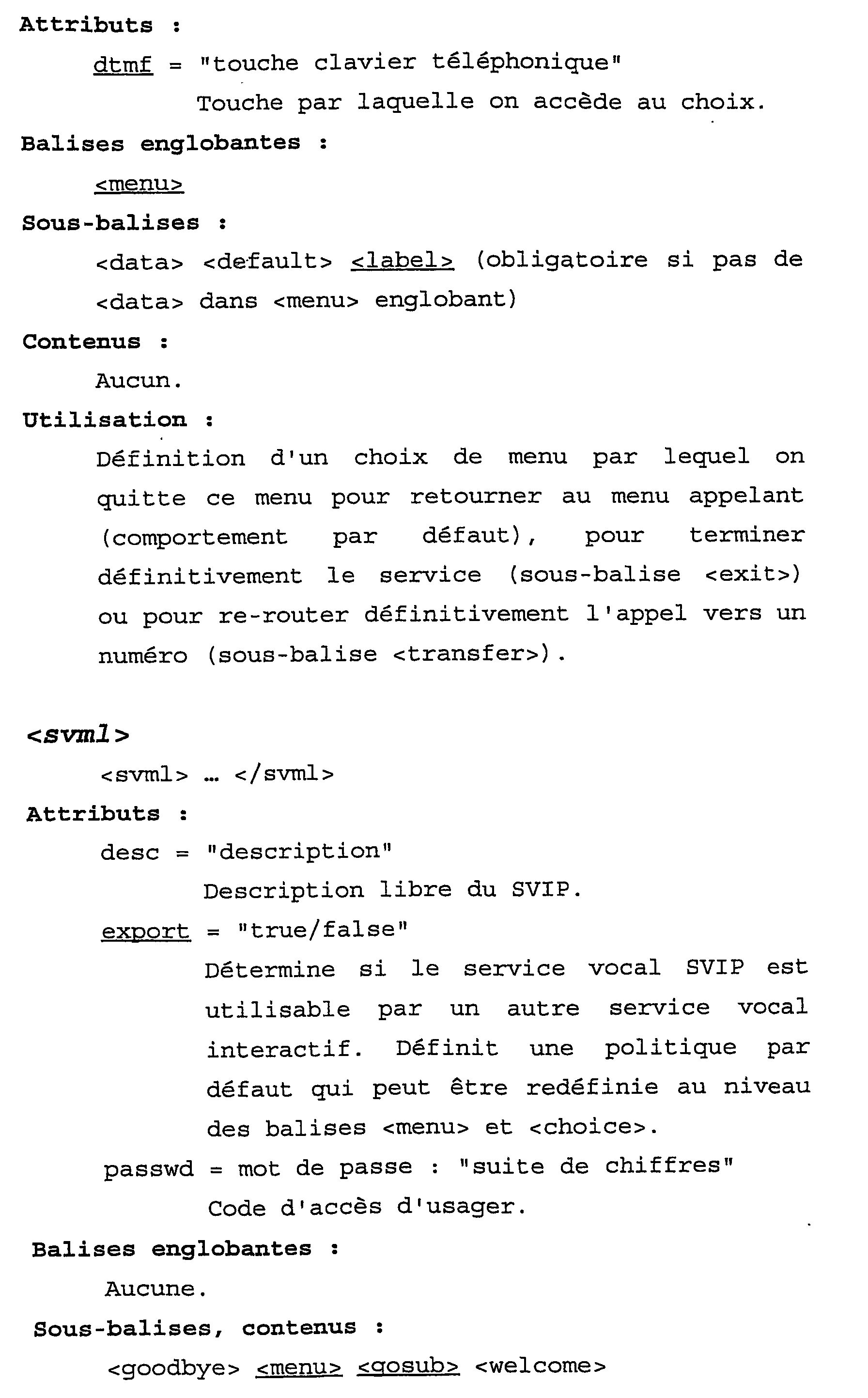

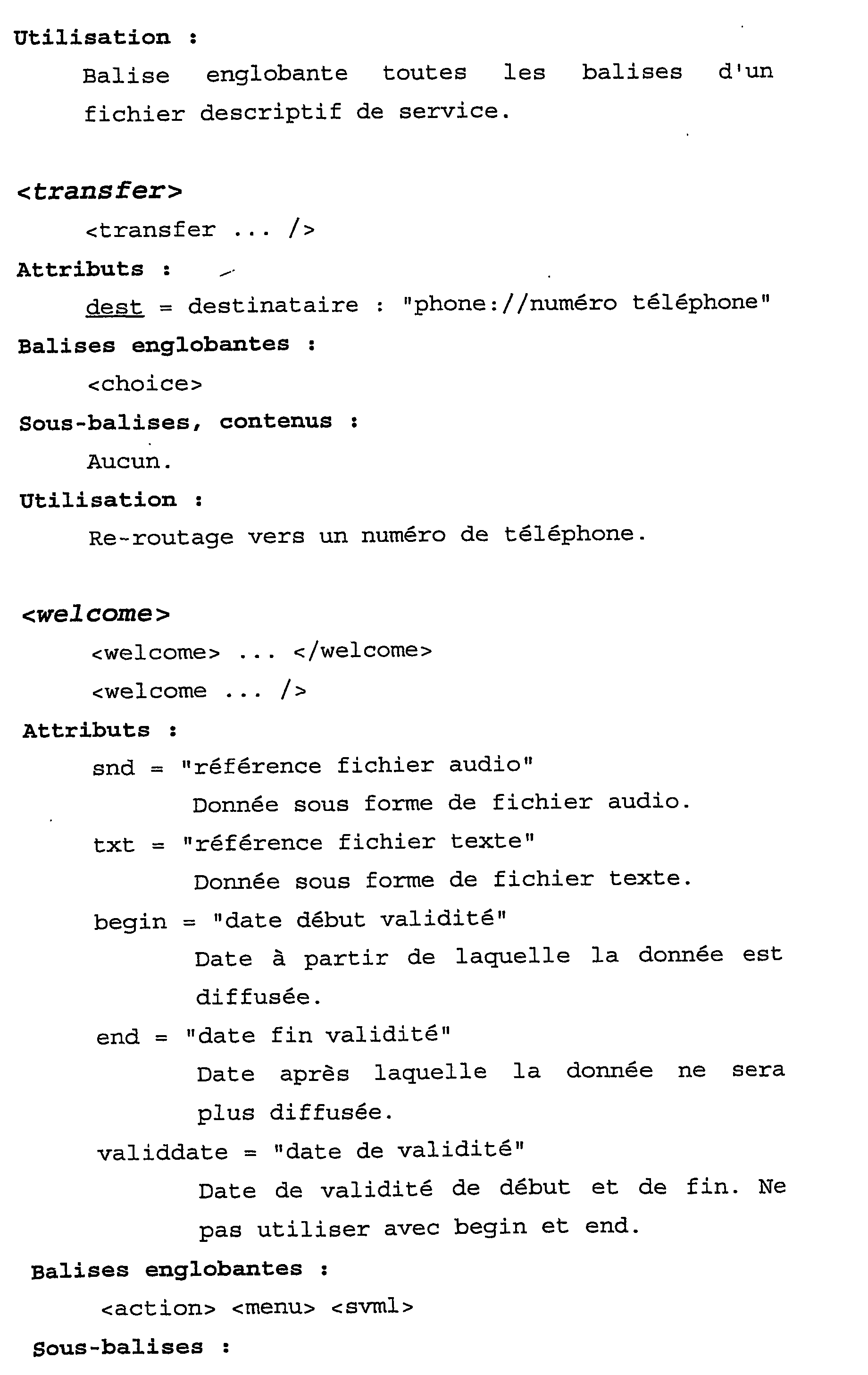

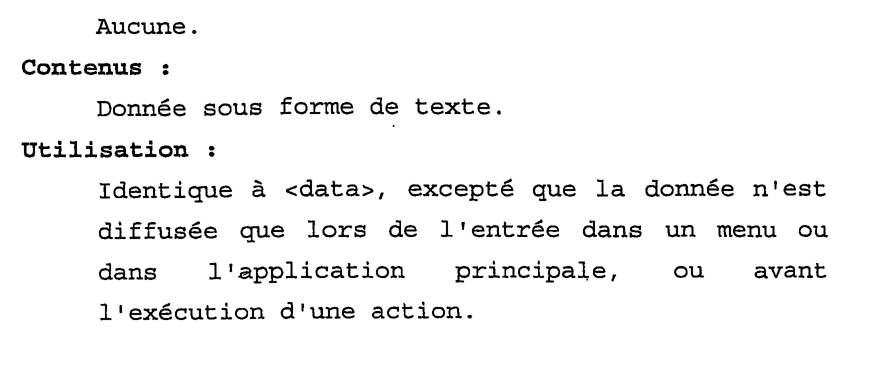

### ANNEXE 2 : récapitulatif des balises du langage SVML.

| <balise> (nom) | Utilisation | Attributs obligatoires | Attributs optionnels | Doit être contenu dans | Peut être contenu dans | Doit contenir | Peut contenir |
|---|---|---|---|---|---|---|---|
| <action> | Déclencheme nt d'une action via une URL | snd ou txt ou url | desc | <choice> | - | - | <goodbye> <param> <welcome> |
| <choice> (choix) | Définition d'un choix possible dans un menu | dtmf (touche) | begin end export validdate | <menu> | - | <label> (si pas de <data> dans le <menu>) | <action> <data> <default> <exit> <gosub> <transfer> |
| <data> (donnée) | Diffusion d'une donnée, prompt de menu | Si aucune donnée texte définie : snd ou txt | snd txt begin end validdate | - | <choice> <menu> <return> | Si aucun attribut snd ou txt : donnée texte | Donnée texte |
| <default> (défaut) | Diffusion d'une donnée si aucune date valide | Si aucune donnée texte définie : snd ou txt | snd txt begin end validdate | - | <choice> <return> | Si aucun attribut snd ou txt : donnée texte | Donnée texte |
| <exit> (sortie) | Sortie définitive du service | - | - | - | <choice> | - | - |
| <goodbye> (au revoir) | Donnée diffusée en fin de menu ou action | Si aucune donnée texte définie : snd ou txt | snd txt begin end validdate | - | <action> <menu> <svml> | Si aucun attribut snd ou txt : donnée texte | Donnée texte |
| <gosub> (sous-menu) | Appel d'un sous-menu | src | - | <svml> | <choice> <menu> | - | - |
| <label> (description) | Description d'un choix de menu | Si aucune donnée texte définie : snd ou txt | snd txt | <choice> (si pas de <data> dans le <menu>) <return> | - | Si aucun attribut snd ou txt : donnée texte | Donnée texte |
| <menu> | Définition d'un menu à choix multiples | id (Identificateur) | export passwd | <svml> | - | <choice> <return> | <data> <goodbye> <welcome> |
| <param> (paramètre) | Définition d'un paramètre transmis à une action | name Si aucune donnée texte définie : snd ou txt type | - | <action> | - | - | Donnée texte |
| <return> (retour) | Définition d'un choix permettant de quitter un menu | dtmf (touche) | - | <menu> | - | <label> (si pas de <data> dans le <menu>) | <data> <default> |
| <svml> (fichier SVML) | Balise englobante toutes les balises d'un fichier SVML | export | desc passwd | - | - | <menu> <gosub> | <goodbye> <welcome> |
| <transfer> (transfert) | Re-routage vers un numéro de téléphone. | Dest (destinataire) | - | - | <choice> | - | - |
| <welcome> (bienvenue) | Donnée diffusée en début de menu ou action | Si aucune donnée texte définie : snd ou txt | snd txt begin end validdate | - | <action> <menu> <svml> | Si aucun attribut snd ou txt : donnée texte | Donnée texte |

### ANNEXE 3 : Code SVML pour le service AR de la figure 2A

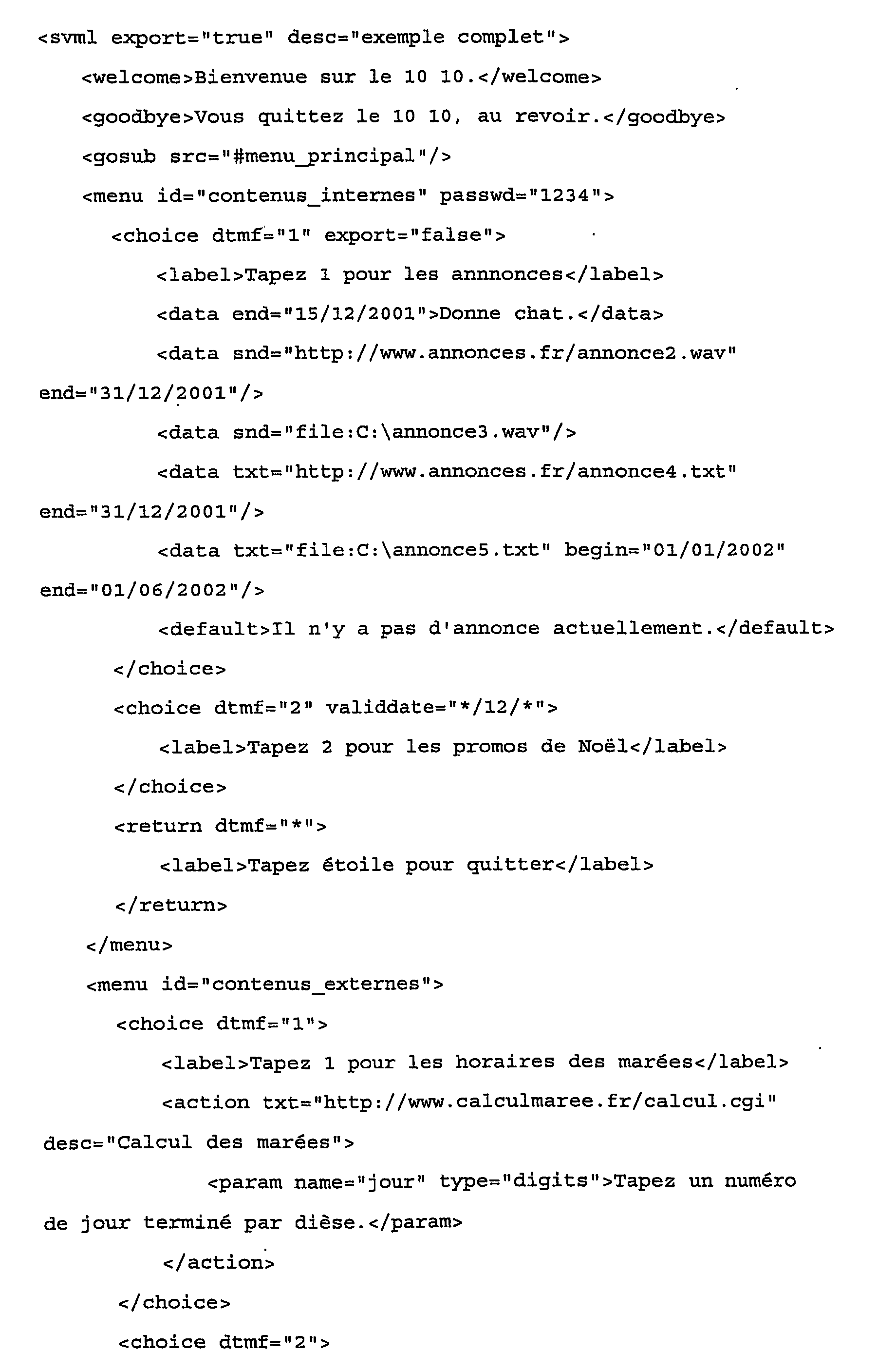

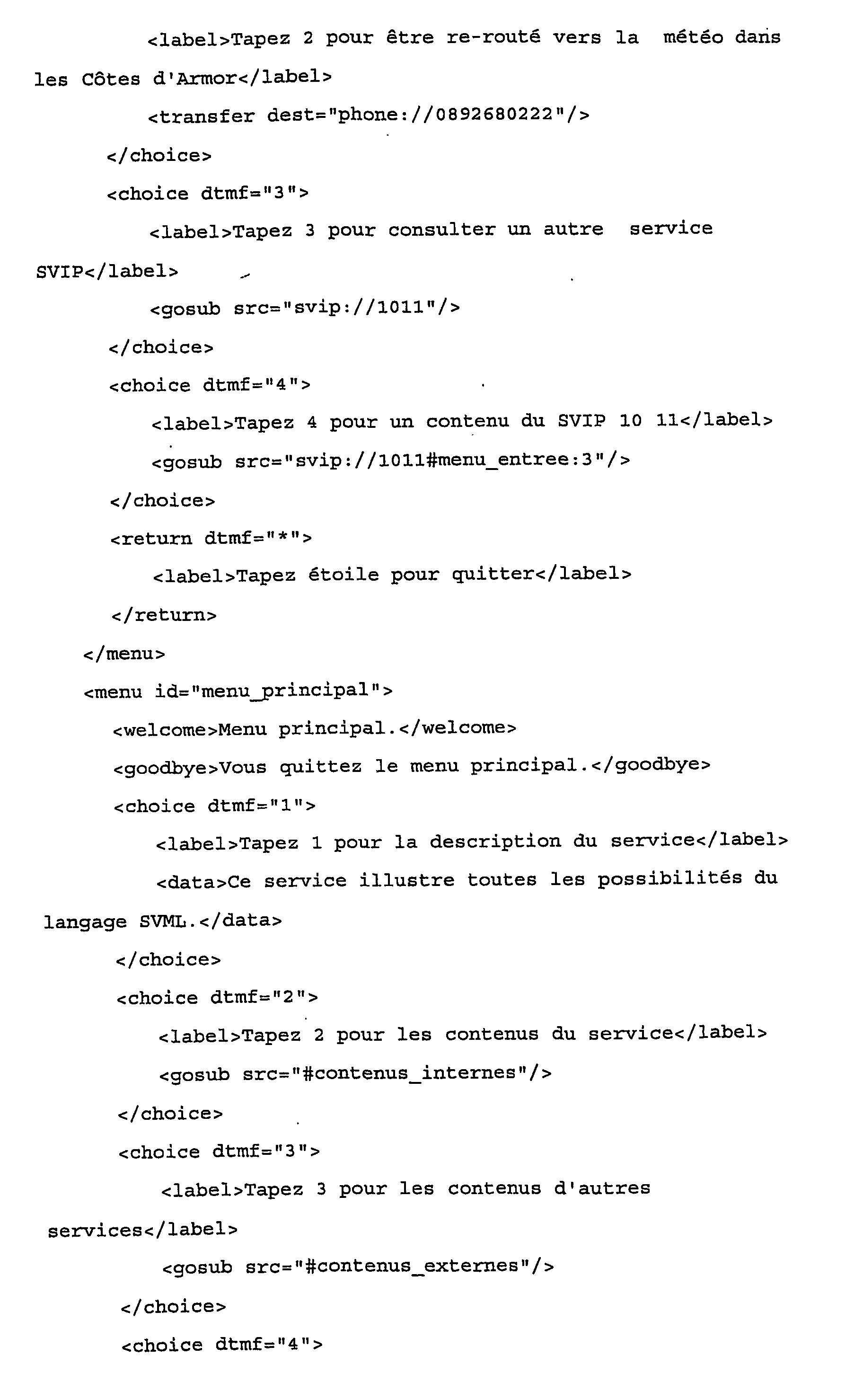

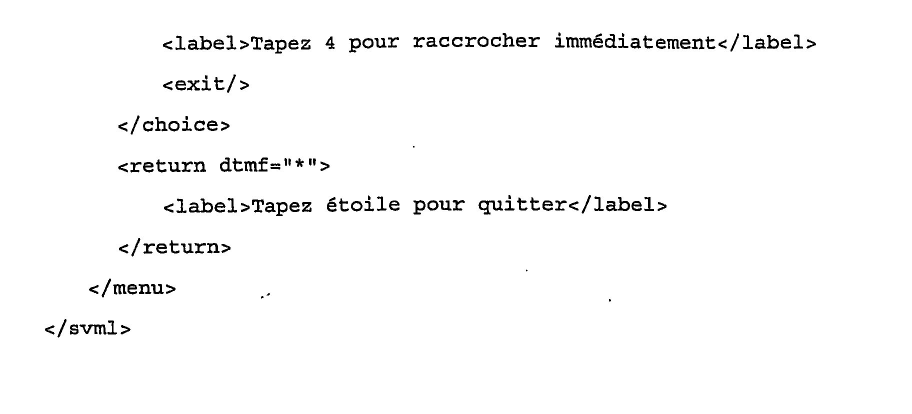

## Revendications

1. Procédé pour accéder depuis un terminal d'usager à des services vocaux exécutés selon un premier langage dans un serveur vocal interactif, **caractérisé en ce qu'**il comprend dans une plate-forme (PSV) communiquant avec le serveur vocal (SVI),
une mise en réseau (C9) des services vocaux écrits en un deuxième langage, au moyen d'identificateurs (IDSV, IDPASV(IDM,IDCH)) inclus dans des services vocaux (SV) et relatifs à des parties d'autres services vocaux (SVa) et au moyen de retours vers lesdits services vocaux inclus respectivement dans lesdites parties d'autres services vocaux, et
par une conversion (E17) du deuxième langage en le premier langage dans la plate-forme, de tout service vocal (SV) appelé depuis le terminal (TU) à travers le serveur vocal (SVI) afin de transmettre depuis la plate-forme le service vocal (SV) converti en le premier langage au serveur vocal pour l'y exécuter (E19), et de toute partie d'un autre service vocal (SVa) identifiée dans ledit service vocal et appelée (E191) au cours de l'exécution dudit service vocal afin de transmettre depuis la plate-forme la partie de service vocal convertie en le premier langage au serveur vocal pour l'y exécuter.

2. Procédé conforme à la revendication 1, selon lequel les services vocaux sont implémentés dans plusieurs plates-formes (PSV, PSVa), deux plates-formes communiquant entre elles lorsqu'au moins une partie d'un service dans l'une d'elles est identifiée et appelée par un autre service dans l'autre plate-forme.

3. Procédé conforme à la revendication 1 ou 2, comprenant depuis un terminal d'administrateur l'introduction (C10) dans un service vocal (SV) en le deuxième langage d'un attribut pour autoriser ou interdire l'appel du service vocal ou d'une partie (PASV) du service vocal dans un autre service vocal.

4. Procédé conforme à l'une quelconque des revendications 1 à 3, comprenant depuis un terminal d'administrateur (TA) l'introduction (C9) de l'identificateur (IDSVa, IDPASVa) d'un autre service ou d'une partie d'un autre service dans un service vocal écrit en le deuxième langage.

5. Procédé conforme à la revendication 4, **caractérisé en ce que** la partie d'autre service vocal (SVa) identifiée dans un service vocal est un service vocal, un sous-menu dans un service vocal, ou un choix de sous-menus dans un service vocal.

6. Procédé conforme à l'une quelconque des revendications 1 à 5, comprenant depuis un terminal d'administrateur (TA) l'introduction (C7) de l'identificateur d'un fichier texte à synthétiser en un fichier vocal dans le serveur vocal interactif (SVI), ou d'un fichier son saisi ou lu dans le terminal d'administrateur (TA), dans un service vocal (SV) en le deuxième langage afin de mémoriser le fichier dans la plate-forme (PSV).

7. Procédé conforme à l'une quelconque des revendications 1 à 6, comprenant depuis un terminal d'administrateur (TA) l'introduction (C8) dans un service vocal (SV) en le deuxième langage, d'une adresse d'un fichier texte à synthétiser en un fichier vocal dans le serveur vocal (SVI) ou l'adresse d'un fichier son, le fichier texte ou son étant disponible dans une autre plate-forme éloignée (PFD).

8. Procédé conforme à l'une quelconque des revendications 1 à 10, comprenant depuis un terminal d'administrateur (TA) la fourniture (C12) d'un résumé d'un service vocal (SV) vocal ou textuel à synthétiser ultérieurement à la plate-forme (PSV).

9. Procédé conforme à l'une quelconque des revendications 1 à 8, comprenant l'introduction (C6, C51) dans le premier service vocal (SV) de dates de début et fin de validité entre lesquelles, ou d'au moins une date de validité pendant laquelle, une donnée incluse dans le premier service vocal est accessible dans la plate-forme (PSV) au terminal d'usager (TU) via un serveur vocal (SVI).

10. Procédé conforme à l'une quelconque des revendications 1 à 9, comprenant depuis un terminal d'administrateur (TA) l'association d'un mot de passe (MPA) à un identificateur (IDSV) d'un service vocal (SV) avant que le service vocal édité dans le terminal d'administrateur soit sauvegardé en le deuxième langage dans la plate-forme (PSV).

11. Procédé conforme à l'une quelconque des revendications 1 à 10, comprenant une autorisation préalable (C11, E14) à consulter un service vocal (SV) dans la plate-forme (PSV) lorsque la plate-forme trouve un code secret (CSSV) du service vocal transmis (E12) par le terminal d'usager (TU) à travers le serveur vocal (SVI) en correspondance avec un identificateur (IDSV) du service vocal (SV) transmis (E6, E11) par le terminal d'usager à travers le serveur vocal.

12. Procédé conforme à l'une quelconque des revendications 1 à 11, comprenant une autorisation préalable (C11, E14) à consulter un service vocal (SV) dans la plate-forme (PSV) lorsque la plate-forme trouve un identificateur (NTU) du terminal d'usager (TU) transmis (E12) par le serveur vocal (SVI) en correspondance avec un identificateur (IDSV) du service vocal (SV) transmis (E6, E11) par le terminal d'usager à travers le serveur vocal.

13. Procédé conforme à la revendication 12, comprenant une sélection (E8, E9, E10) d'un service vocal (SV) parmi une liste de services vocaux transmise par le serveur vocal (SVI) au terminal d'usager (TU) afin que le terminal appelle le service vocal sélectionné en transmettant (E11, E12) l'identificateur (IDSV) du service vocal sélectionné à la plate-forme (PSV) à travers le serveur vocal (SVI).

14. Procédé conforme à l'une quelconque des revendications 1 à 13, comprenant l'enregistrement (E17, E21 ; E121, E193) du début et de la fin de consultation d'un service (SV, SVa) ou d'une partie de service (PASVa) dans la plate-forme.

15. Système de services vocaux interactifs dans lequel un terminal d'usager accède à des services vocaux exécutés selon un premier langage dans un serveur vocal interactif, **caractérisé en ce qu'**il comprend une première plate-forme (M1, PSV) et un terminal d'administrateur (TA) pour éditer un service vocal interactif accessible depuis le terminal d'usager (TU) à travers le serveur vocal interactif (SVI) dans une deuxième plate-forme (M2, PSV),
la première plate-forme (M1, PSV) mettant en réseau (C9) des services vocaux écrits en un deuxième langage, au moyen d'identificateurs (IDSV, IDPASV (IDM, IDCH)) inclus dans des services vocaux (SV) et relatifs à des parties d'autres services vocaux (SVa) et au moyen de retours vers lesdits services vocaux inclus respectivement dans lesdites parties d'autres services vocaux, et
la deuxième plate-forme (M2, PSV) convertissant (E17) du deuxième langage en le premier langage tout service vocal (SV) appelé depuis le terminal (TU) à travers le serveur vocal (SVI) afin de transmettre depuis la deuxième plate-forme le service vocal (SV) converti en le premier langage au serveur vocal pour l'y exécuter (E19), et toute partie d'un autre service vocal (SVa) identifiée dans ledit service vocal et appelée (E191) au cours de l'exécution dudit service vocal afin de transmettre depuis la deuxième plate-forme la partie de service vocal convertie en le premier langage au serveur vocal pour l'y exécuter.

16. Système conforme à la revendication 15, dans lequel la première plate-forme (M1, PSV) comprend un moyen (T1) pour faire correspondre des mots de passe (MPA) d'administrateurs (TA) et des identificateurs (IDSV) de services vocaux édités (SV).

17. Système conforme à la revendication 15 à 16, dans lequel la deuxième plate-forme (M2, PSV) comprend un moyen (T2) pour faire correspondre des identificateurs (IDSV, IDPASV) de services vocaux et de parties de services vocaux et des codes d'accès (CSSV, CSPASV) et/ou des listes d'adresses de terminaux d'usager (NTU).

18. Système conforme à l'une quelconque des revendications 15 à 17, dans lequel la deuxième plate-forme (M2, PSV) comprend un moyen (T3) pour associer à l'adresse (NTU) d'un terminal d'usager, des identificateurs (IDSV, IDPASV) de services vocaux et des heures de début et de fin de consultation de services vocaux par le terminal d'usager.

19. Système conforme à l'une quelconque des revendications 15 à 18, dans lequel les première et deuxième plates-formes sont confondues en une unique plate-forme (PSV).

## Patentansprüche

1. Verfahren für den Zugriff über ein Nutzerterminal auf Sprachdienste, die in einer ersten Sprache in einem interaktiven Sprachserver ausgeführt werden, **dadurch gekennzeichnet, dass** es auf einer Plattform (PSV), die mit dem Sprachserver (SVI) kommuniziert, umfasst:
eine Vernetzung (C9) von Sprachdiensten, die in einer zweiten Sprache geschrieben sind, anhand von Kennzeichen (IDSV, IDPASV (IDM, IDCH)), die in die Sprachdienste (SV) integriert sind und sich auf Teile anderer Sprachdienste (SVa) beziehen, und mittels Rücksprüngen zu den genannten Sprachdiensten, die jeweils in die genannten Teile der anderen Sprachdienste integriert sind, und
eine Konvertierung (E17) jedes Sprachdienstes (SV), der vom Terminal (TU) aus aufgerufen wird, über den Sprachserver (SV) von der zweiten Sprache in die erste Sprache der Plattform, um den in die erste Sprache konvertierten Sprachdienst (SV) von der Plattform aus an den Sprachserver zu übertragen, um diesen dort auszuführen (E19), sowie aller Teile eines anderen Sprachdienstes (SVa), der in dem genannten Sprachdienst **gekennzeichnet** ist und im Verlauf der Ausführung des genannten Sprachdienstes aufgerufen wird (E191), um von der Plattform aus den Teil des in die erste Sprache konvertierten Sprachdienstes an den Sprachserver zu übertragen, um diesen dort auszuführen.

2. Verfahren gemäß Anspruch 1, in dem die Sprachdienste auf mehreren Plattformen (PSV, PSVa) implementiert sind, wobei zwei Plattformen miteinander kommunizieren, wenn mindestens ein Teil eines Dienstes auf einer von ihnen identifiziert und von einem anderen Dienst auf der anderen Plattform aufgerufen wird.

3. Verfahren gemäß Anspruch 1 oder 2, darin bestehend, dass von einem Administratorterminal aus ein Attribut in einen Sprachdienst (SV) in der zweiten Sprache eingeführt wird (C10), um den Aufruf des Sprachdienstes oder eines Teils (PASV) des Sprachdienstes in einem anderen Sprachdienst freizugeben oder zu sperren.

4. Verfahren gemäß einem der Ansprüche 1 bis 3, darin bestehend, dass von einem Administratorterminal (TA) aus die Kennzeichen (IDSVa, IDPASVa) eines anderen Dienstes oder eines Teils eines anderen Dienstes in einen Sprachdienst eingeführt werden (C9), der in der zweiten Sprache geschrieben ist.

5. Verfahren gemäß Anspruch 4, **dadurch gekennzeichnet, dass** es sich bei dem Teil des anderen Sprachdienstes (SVa), der in einem Sprachdienst **gekennzeichnet** ist, um einen Sprachdienst, ein Untermenü in einem Sprachdienst oder um die Auswahl von Untermenüs in einem Sprachdienst handelt.

6. Verfahren gemäß einem der Ansprüche 1 bis 5, darin bestehend, dass von einem Administratorterminal (TA) aus ein Kennzeichen für eine Textdatei, die im interaktiven Sprachserver (SVI) in eine Sprachdatei umgewandelt werden soll, oder für eine Tondatei, die im Administratorterminal (TA) erfasst oder eingelesen wurde, in einem Sprachdienst (SV) in der zweiten Sprache eingeführt wird (C7), um die Datei auf der Plattform (PSV) zu speichern.

7. Verfahren gemäß einem der Ansprüche 1 bis 6, darin bestehend, dass von einem Administratorterminal (TA) aus in einem Sprachdienst (SV) in der zweiten Sprache die Adresse einer Textdatei, die im interaktiven Sprachserver (SVI) in eine Sprachdatei umgewandelt werden soll, bzw. die Adresse einer Tondatei eingeführt wird (C8), wobei die Text- oder Tondatei in einer anderen, entfernten Plattform (PFD) zur Verfügung steht.

8. Verfahren gemäß einem der Ansprüche 1 bis 10, darin bestehend, dass von einem Administratorterminal (TA) aus die Sprach- oder Textübersicht eines Sprachdienstes (SV) geliefert wird (C12), die später von der Plattform (PSV) erstellt wird.

9. Verfahren gemäß einem der Ansprüche 1 bis 8, darin bestehend, dass die Start- und Enddaten für die Gültigkeit in den ersten Sprachdienst (SV) eingeführt werden, bzw. mindestens ein Gültigkeitsdatum eingeführt wird, zwischen denen, bzw. während dessen die in den ersten Sprachdienst integrierten Daten dem Nutzerterminal (TU) der Plattform (PSV) über einen Sprachserver (SVI) zugänglich sind.

10. Verfahren gemäß einem der Ansprüche 1 bis 9, darin bestehend dass von einem Administratorterminal (TA) aus einem Kennzeichen (IDSV) eines Sprachdienstes (SV) ein Passwort (MPA) zugeordnet wird, ehe der im Administratorterminal bearbeitete Sprachdienst (SV) in der zweiten Sprache auf der Plattform (PSV) gespeichert wird.

11. Verfahren gemäß einem der Ansprüche 1 bis 10, darin bestehend, dass eine vorläufige Zulassung (C11, E14) zum Aufruf eines Sprachdienstes (SV) auf der Plattform (PSV) erteilt wird, wenn die Plattform den Geheimcode (CSSV) des vom Nutzerterminal (TU) über den Sprachserver (SVI) übertragenen Sprachdienstes (E12) in Verbindung mit dem Kennzeichen (IDSV) des Sprachdienstes (SV) erfasst, der vom Nutzerterminal über den Sprachserver übermittelt wird (E6, E11).

12. Verfahren gemäß einem der Ansprüche 1 bis 11, darin bestehend, dass eine vorläufige Zulassung (C11, E14) zum Aufruf eines Sprachdienstes (SV) auf der Plattform (PSV) erteilt wird, wenn die Plattform das Kennzeichen (NTU) des Nutzerterminals (TU) erfasst, das vom Sprachserver (SVI) in Verbindung mit dem Kennzeichen (IDSV) des Sprachdienstes (SV) übermittelt wird (E12), das vom Nutzerterminal über den Sprachserver übermittelt wird (E6, E11).

13. Verfahren gemäß Anspruch 12, darin bestehend, dass die Auswahl (E8, E9, E10) eines Sprachdienstes (SV) anhand einer Liste von Sprachdiensten vorgenommen wird, die vom Sprachserver (SVI) an das Nutzerterminal (TU) übermittelt werden, damit das Terminal den gewählten Sprachdienst aufruft, in dem es das Kennzeichen (IDSV) des ausgewählten Sprachdienstes über den Sprachserver (SVI) an die Plattform (PSV) übermittelt (E11, E12).

14. Verfahren gemäß einem der Ansprüche 1 bis 13, darin bestehend, dass Start- und Endzeit des Aufrufs eines Dienstes (SV, SVa) oder eines Teils eines Dienstes (PASVa) auf der Plattform aufgezeichnet werden (E17, E21, E121, E193).

15. System mit interaktiven Sprachdiensten, in dem ein Nutzerterminal auf Sprachdienste zugreift, die in einer ersten Sprache in einem interaktiven Sprachserver ausgeführt werden, **dadurch gekennzeichnet, dass** es eine erste Plattform (M1, PSV) und ein Administratorterminal (TA) umfasst, um einen interaktiven Sprachdienst zu bearbeiten, auf den vom Nutzerterminal (TU) aus über den interaktiven Sprachserver (SVI) auf einer zweiten Plattform (M2, PSV) zugegriffen werden kann,
wobei die erste Plattform (M1, PSV) mit Hilfe von Kennzeichen (IDSV, IDPASV (IDM,IDCH)), die in die Sprachdienste (SV) integriert sind und sich auf Teile anderer Sprachdienste (SVa) beziehen, sowie mit Hilfe von Rücksprüngen auf die genannten Sprachdienste, die jeweils in die genannten Bereiche der anderen Sprachdienste integriert sind, eine Vernetzung (C9) der Sprachdienste, die in einer zweiten Sprache geschrieben sind, herstellt, und
wobei die zweite Plattform (M2, PSV) jeden Sprachdienst (SV) in der zweiten Sprache, der von dem Terminal (TU) aus aufgerufen wird, über den Sprachserver (SVI) in die erste Sprache konvertiert (E17), um den in die erste Sprache konvertierten Sprachdienst (SV) von der zweiten Plattform aus an den Sprachserver zu übermitteln, um diesen dort auszuführen (E19), sowie alle Teile eines anderen Sprachdienstes (SVa), die in dem genannten Sprachdienst **gekennzeichnet** sind und im Verlauf der Ausführung des genannten Sprachdienstes aufgerufen werden (E191), um den Teil des in die erste Sprache konvertierten Sprachdienstes von der zweiten Plattform aus an den Sprachserver zu übertragen, um diesen dort auszuführen.

16. System gemäß Anspruch 15, in dem die erste Plattform (M1, PSV) ein Mittel (T1) umfasst, um die Passwörter (MPA) der Administratoren (TA) und die Kennzeichen (IDSV) der bearbeiteten Sprachdienste (SV) abzugleichen.

17. System gemäß Anspruch 15 und 16, in dem die zweite Plattform (M2, PSV) ein Mittel (T2) umfasst, um die Kennzeichen (IDSV, IDPASV) der Sprachdienste und der Teile von Sprachdiensten und die Zugangscodes (CSSV, CSPASV) und/oder die Adressenlisten der Nutzerterminals (NTU) abzugleichen.

18. System gemäß einem der Ansprüche 15 bis 17, in dem die zweite Plattform (M2, PSV) ein Mittel (T3) umfasst, um der Adresse (NTU) eines Nutzerterminals die Kennzeichen (IDSV, IDPASV) der Sprachdienste und die Start- und Endzeiten des Aufrufs der Sprachdienste von dem Nutzerterminal aus zuzuordnen.

19. System gemäß einem der Ansprüche 15 bis 18, in dem die erste und die zweite Plattform in einer einzigen Plattform (PSV) zusammengefasst sind.

## Claims

1. A method for accessing from a user terminal voice services executed in a first language in an interactive voice server, **characterized in that** it comprises in a platform (PSV) communicating with the vocal server (SVI),
networking (C9) voice services written in a second language by means of identifiers (IDSV, IDPASV(IDM, IDCH)) included in voice services (SV) and relating to portions of other voice services (SVa) and by means of returns to said voice services respectively included in said portions of other voice services, and
converting (E17) from the second language into the first language, in the platform, any voice service (SV) called up from the terminal (TU) via the voice server (SVI) in order to transmit the voice service (SV) converted into the first language from the platform to the voice server for execution (E19) therein, and any portion of another voice service (SVa) identified in said voice service and called up (E191) during the execution of said voice service in order to transmit the voice service portion converted into the first language from the platform to the voice server for execution therein.

2. A method according to claim 1, wherein the voice services are implemented on a plurality of platforms (PSV, PSVa), two platforms communicating with each other if at least a portion of a service on one of them is identified and called up by another service on the other platform.

3. A method according to claim 1 or 2, comprising introducing (C10) from an administrator terminal into a voice service (SV) in the second language an attribute for authorizing or prohibiting calling up the voice service or a portion (PASV) of the voice service from within another voice service.

4. A method according to any of claims 1 to 3, comprising introducing (C9) the identifier (IDSVa, IDPASVa) of another service or of a portion of another service from an administrator terminal (TA) into a voice service written in the second language.

5. A method according to claim 4, **characterized in that** the other voice service portion (SVa) identified in a voice service is a voice service, a submenu in a voice service or a choice of submenus in a voice service.

6. A method according to any of claims 1 to 5, comprising from an administrator terminal (TA), introducing (C7) the identifier of a text file to be synthesized into a voice file in the interactive voice server (SVI), or a sound file entered or read in the administrator terminal (TA), into a voice service (SV) in the second language in order to store the file on the platform (PSV).

7. A method according to any of claims 1 to 6, comprising from an administrator terminal (TA), introducing (C8) into a voice service (SV) in the second language an address of a text file to be synthesized in the form of a voice file in the voice server (SVI) or the address of a sound file, the text or sound file being available on a remote other platform (PFD).

8. A method according to any of claims 1 to 10, comprising from an administrator terminal (TA), supplying (C12) a summary of a vocal or textual voice service (SV) to be subsequently synthesized to the platform (PSV).

9. A method according to any of claims 1 to 8, comprising introducing (C6, C51) into the first voice service (SV) start and end of validity dates between which or at least one validity date during which data of the first voice service is accessible on the platform (PSV) to the user terminal (TU) via a voice server (SVI).

10. A method according to any of claims 1 to 9, from an administrator terminal (TA), comprising associating a password (MPA) with an identifier (IDSV) of a voice service (SV) before the voice service published in the administrator terminal is saved in the second language on the platform (PSV).

11. A method according to any of claims 1 to 10, comprising prior authorization (C11, E14) to consult a voice service (SV) on the platform (PSV) if the platform finds a secret code (CSSV) of the voice service transmitted (E12) by the user terminal (TU) via the voice server (SVI) in corresponding relationship with an identifier (IDSV) of the voice service (SV) transmitted (E6, E11) by the user terminal via the voice server.

12. A method according to any of claims 1 to 11, comprising prior authorization (C11, E14) to consult a voice service (SV) on the platform (PSV) if the platform finds an identifier (NTU) of the user terminal (TU) transmitted (E12) by the voice server (SVI) in corresponding relationship with an identifier (IDSV) of the voice service (SV) transmitted (E6, E11) by the user terminal via the voice server.

13. A method according to claim 12, comprising selecting (E8, E9, E10) a voice service (SV) from a list of voice services transmitted by the voice server (SVI) to the user terminal (TU) in order for the terminal to call up the selected voice service by transmitting (E11, E12) the identifier (IDSV) of the selected voice service to the platform (PSV) via the voice server (SVI).

14. A method according to any of claims 1 to 13, comprising recording (E17, E21; E121, E193) start and end of consultation of a service (SV, SVa) or of a service portion (PASVa) on the platform.

15. An interactive voice services system wherein a user terminal accesses voice services executed in a first language in an interactive voice server, **characterized in that** it comprises a first platform (M1, PSV) and an administrator terminal (TA) for publishing an interactive voice service accessible from the user terminal (TU) via the interactive voice server (SVI) on a second platform (M2, PSV),
the first platform (M1, PSV) networking (C9) voice services written in a second language by means of identifiers (IDSV, IDPASV (IDM, IDCH)) included in voice services (SV) and relating to portions of other voice services (SVa) and by means of returns to said voice services respectively included in said portions of other voice services, and
the second platform (M2, PSV) converting from the second language into the first language any voice service (SV) called up from the terminal (TU) via the voice server (SVI) in order to transmit the voice service (SV) converted into the first language from the second platform to the voice server for execution (E19) therein, and any portion of another voice service (SVa) identified in said voice service and called up (E191) during the execution of said voice service in order to transmit the voice service portion converted into the first language from the second platform to the voice server for execution therein.

16. A system according to claim 15, wherein the first platform (M1, PSV) comprises means (T1) for establishing a correspondence between passwords (MPA) of administrators (TA) and identifiers (IDSV) of published voice services (SV).

17. A system according to claim 15 to 16, wherein the second platform (M2, PSV) comprises means (T2) for establishing a correspondence between identifiers (IDSV, IDPASV) of voice services and portions of voice services and access codes (CSSV, CSPASV) and/or lists of user terminal addresses (NTU).

18. A system according to any of claims 15 to 17, wherein the second platform (M2, PSV) comprises means (T3) for associating with the address (NTU) of a user terminal identifiers (IDSV, IDPASV) of voice services and start and end times of consultation of voice services by the user terminal.

19. A system according to any of claims 15 to 18, wherein the first and second platforms are combined in one and the same platform (PSV).
